(19) **Europäisches Patentamt**

**European Patent Office**

**Office européen des brevets**

(11) **EP 0 781 041 B1**

(12) **FASCICULE DE BREVET EUROPEEN**

(45) Date de publication et mention
de la délivrance du brevet:
**26.07.2000 Bulletin 2000/30**

(51) Int Cl.⁷: **H04N 5/44**, H04N 7/01

(21) Numéro de dépôt: **96402779.1**

(22) Date de dépôt: **18.12.1996**

(54) **Procédé d'interpolation de trames progressives**

Verfahren zur Interpolation von Vollbilden

Progressive frames interpolation system

(84) Etats contractants désignés:
**DE FR GB IT**

(30) Priorité: **22.12.1995 FR 9515404**

(43) Date de publication de la demande:
**25.06.1997 Bulletin 1997/26**

(73) Titulaire: **THOMSON multimedia
92648 Boulogne Cédex (FR)**

(72) Inventeur: **Heimburger, Catherine
92050 Paris la Defense Cedex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 395 267       EP-A- 0 564 957
EP-A- 0 650 293       FR-A- 2 604 049
FR-A- 2 700 090**

• **HAAVISTO P ET AL: "SCAN RATE
UP-CONVERSIONS USING ADAPTIVE
WEIGHTED MEDIAN FILTERING" 30 Août 1989 ,
SIGNAL PROCESSING OF HDTV, 2, TURIN, AUG.
30 - SEPT. 1, 1989, NR. WORKSHOP 3, PAGE(S)
703 - 710 , CHIARIGLIONE L XP000215288 *
abrégé * * page 709, alinéa 5 - page 710, alinéa 6 ***

**Description**

L'invention concerne un procédé d'interpolation de trames progressives. Ce procédé est particulièrement adapté à des systems de conversion d'images comportant un changement de fréquence de trames, par exemple d'un format entrelacé 50 Hz en un format progressif 75 Hz. L'invention s'applique notamment dans le domaine de la télévision.

Une télévision grand public actuelle reçoit et affiche 25 images par seconde, composées chacune de deux trames, une comportant les lignes paires et l'autre les lignes impaires de l'image; l'écran est ainsi balayé verticalement 50 fois par seconde, ce qui est une fréquence faible en regard du temps de réaction de l'oeil. La fréquence limite à partir de laquelle l'oeil arriverait à résoudre temporellement une séquence télévisé en une succession d'images discrètes n'est pas très inférieure à 50 Hz. Par contre, ce papillotement est pratiquement éliminé pour une fréquence trame de 75 Hz ou mieux de 100 Hz; cette dernière solution correspond donc à un doublement de fréquence.

La solution la plus évidente pour réaliser ce doublement de fréquence consiste à simplement répéter deux fois à l'affichage chaque trame reçue; c'est pourquoi un tel dispositif est appelé 100 Hz AABB. Il s'agit encore d'un affichage entrelacé (on affiche les 312,5 lignes paires pendant 10 ms, puis les 312,5 lignes impaires pendant les 10 ms suivantes, etc.).

Les carences d'un algorithme aussi simpliste apparaissent cependant rapidement; efficace sur des images immobiles, il se révèle fatiguant pour les yeux dès qu'un objet se déplace sur l'écran. Un point mobile horizontalement a l'air de se dédoubler, d'autant plus que sa vitesse est grande; ceci est dû au fait qu'il est vu par l'oeil au fil des images successives comme occupant deux fois une position, puis deux fois une position voisine, etc. Les systèmes d'asservissement de l'oeil lui permettant de suivre un objet en déplacement sont très perturbés par ces irrégularités, et ne lui permettent pas d'identifier clairement le mouvement original.

Une bonne solution consiste à détecter et calculer le mouvement des différentes parties de l'image, et à calculer les images intermédiaires grâce à cette information; c'est la stratégie qui a été retenue ici. Le défaut principal du 100Hz AABB décrit plus haut est ainsi corrigé tout en conservant la suppression du papillotement.

Mais un autre défaut des téléviseurs actuels est lié à l'entrelacement des lignes affichées. Sur une image possédant une bonne définition, un détail fin comme une ligne de l'écran ne sera affiché, du fait de l'entrelacement, que tous les 1/25 de seconde. Une solution consiste à afficher toutes les lignes de l'écran à chaque balayage vertical, en reconstituant les lignes non transmises par interpolation temporelle ou spatiale. On peut alors se demander pourquoi ne pas afficher 625 lignes pour chaque trame, avec une fréquence de renouvellement de 100 Hz.

Si l'on garde la fréquence de trame de 100Hz, cela revient à doubler encore le nombre de lignes affichées par seconde, et donc multiplier par quatre la fréquence de balayage des lignes de l'écran par rapport à un récepteur classique: on dit que l'on travaille à fréquence ligne 4H.

Dans un tube cathodique, la déflexion du faisceau d'électrons assurant le balayage du spot est contrôlée par un système d'électroaimants situés à la base du tube. Pour une fréquence de balayage aussi élevée, l'essentiel de l'énergie absorbée par ces électroaimants est restituée sous forme de chaleur, ce qui les rend assez rapidement impropres à leur rôle en l'état actuel de la technologie grand public. Il est donc nécessaire de réduire la fréquence ligne.

La limite supérieure actuellement atteinte est de 3H. Nous aboutissons donc à considérer un standard basé sur une fréquence de trame de 75Hz, avec 625 lignes par trame. L'effet de papillotement est quasiment invisible à 75 Hz; les écrans de certaines stations de travail, par exemple, ont une fréquence de trame de 72 Hz, ce qui les rend beaucoup moins fatiguant à regarder qu'un écran de télévision.

L'invention propose un procédé d'interpolation de trames progressives à partir de trames entrelacées.

Les demandes de brevet européens 95 400722.5 (D94/128I) et 95 400721.7 (D94/128I) au nom de Thomson Consumer Electronics SA décrivent des procédés et dispositifs de conversion d'images d'un format 50 Hz entrelacé en un format 100 Hz entrelacé.

La demande de brevet européen EP-A-064047 également au nom de Thomson Consumer Electronics concerne une méthode de mesure de confiance dans une estimation de mouvement dans un système de conversion d'images.

L'invention a pour objet un procédé de conversion de trames entrelacées en des trames progressives comprenant un changement de fréquences de trames par interpolation et compensation de mouvement caractérisé en ce que

lorsque le vecteur de mouvement associé à un pixel à interpoler est non nul ou lorsque ce vecteur est nul, mais que la confiance accordée à ce vecteur est inférieure à un seuil donné,

l'interpolation d'un pixel d'une trame temporellement située entre deux trames d'entrée est réalisée par un filtrage médian portant sur les valeurs obtenues par un premier filtre temporel linéaire compensé en mouvement, un second filtre temporel linéaire compensé en mouvement et un filtre temporel médian compensé en mouvement.

Le filtrage effectué se compose de trois filtres de base médian et temporels, combinés entre eux grâce à un opérateur médian. Cette combinaison possède plusieurs avantages:

Les filtres linéaires en eux-mêmes donnent des résultats corrects-quelque soit le contenu de l'image- en combinaison avec la compensation de mouvement; ils engendrent cependant une perte de résolution,
le premier filtre médian permet la conservation d'une bonne résolution à l'image de sortie,
le filtre médian final atténue des inconvénients liés à ces trois filtres précédents en interdisant les valeurs trop divergentes. Notamment les écarts du premier filtre médian sont limités par la présence des filtres linéaires, qui généralement divergent peu.

Selon un mode de réalisation particulier, la confiance accordée à un vecteur est une fonction linéaire de l'erreur engendrée par ce vecteur.
L'évaluation de la confiance définie de cette manière permet de n'utiliser la compensation de mouvement que dans la mesure où celle-ci apporte des résultats suffisamment fiables.
Selon un mode de réalisation particulier, lesdits filtres linéaires sont fonction de deux pixels situés respectivement dans les trames d'entrée entourant temporellement la trame à interpoler, les coefficients linéaires d'interpolation de chaque pixel correspondant au rapport des intervalles de temps séparant la trame à interpoler et respectivement la trame d'entrée précédente et la trame d'entrée suivante.
Selon un mode de réalisation particulier, lorsque la trame d'entrée précédente est impaire, ledit filtre temporel médian porte sur les trois pixels suivants:

pour les lignes paires de la trame à interpoler

$$a = P\left[\begin{pmatrix} x \\ y-1 \end{pmatrix} + Front(i,j), \frac{1}{2}\right]$$

$$b = P\left[\begin{pmatrix} x \\ y \end{pmatrix} - Rear(i,j), 0\right]$$

$$c = P\left[\begin{pmatrix} x \\ y+1 \end{pmatrix} + Front(i,j), \frac{1}{2}\right]$$

alors:

$$P_2(x,y) = med\big(ma + (1-m)b; med(a,b,c); mc + (1-m)b\big)$$

pour les lignes impaires de la trame à interpoler

$$a = P\left[\begin{pmatrix} x \\ y-1 \end{pmatrix} - Rear(i,j), 0\right]$$

$$b = P\left[\begin{pmatrix} x \\ y \end{pmatrix} + Front(i,j), \frac{1}{2}\right]$$

$$c = P\left[\begin{pmatrix} x \\ y+1 \end{pmatrix} - Rear(i,j), 0\right]$$

alors:

$$P_2(x,y) = med\big((1-m)a + mb; med(a,b,c); (1-m)c + mb)\big)$$

où Front(i,j) et Rear(i,j) sont les fractions du vecteur de mouvement associé au pixel à interpoler, ce vecteur étant mis à l'échelle et arrondi, où "0" et "1/2" représentent respectivement la trame d'entrée précédant respectivement suivant la trame à interpoler, et où m représente un coefficient d'interpolation dépendant de la position de la trame à interpoler entre les trames d'entrée.

Selon un mode de réalisation particulier, lorsque la trame d'entrée précédente est impaire, ledit filtre temporel médian porte sur les trois pixels suivants:

Pour les lignes impaires de la trame à interpoler

$$a = P\left[\begin{pmatrix} x \\ y-1 \end{pmatrix} + Front(i,j), 1\right]$$

$$b = P\left[\begin{pmatrix} x \\ y \end{pmatrix} - Rear(i,j), \frac{1}{2}\right]$$

$$c = P\left[\begin{pmatrix} x \\ y+1 \end{pmatrix} + Front(i,j), 1\right]$$

alors:

$$P_3(x,y) = med\big((1-n)a + b; med(a,b,c); (1-n)c + b)\big)$$

Pour les lignes paires de la trame à interpoler

$$a = P\left[\begin{pmatrix} x \\ y-1 \end{pmatrix} - Rear(i,j), \frac{1}{2}\right]$$

$$b = P\left[\begin{pmatrix} x \\ y \end{pmatrix} + Front(i,j), 1\right]$$

$$c = P\left[\begin{pmatrix} x \\ y+1 \end{pmatrix} - \text{Rear}(i,j), \frac{1}{2}\right]$$

alors:

$$P3(x,y) = \text{med}\big(na + (1-n)b; \text{med}(a,b,c); nc + (1-n)b\big)$$

où Front(i,j) et Rear(i,j) sont les fractions du vecteur de mouvement associé au pixel à interpoler, ce vecteur étant mis à l'échelle et arrondi, où "1/2" et "1" représentent respectivement la trame d'entrée précédant respectivement suivant la trame à interpoler, et où n représente un coefficient d'interpolation dépendant de la position de la trame à interpoler entre les trames d'entrée.

Selon un mode de réalisation particulier, les deux pixels utilisés pour chaque filtre linéaire sont choisis dans le groupe de trois pixels utilisé par le filtre temporel médian.

Selon un mode de réalisation particulier, les trames entrelacées d'entrée sont issues d'images progressives d'entrée de fréquence 25 Hz et que la fréquence des trames de sortie est de 75 Hz, une première trame de sortie étant temporellement confondue avec la seconde trame issue d'une première image d'entrée, une seconde trame de sortie étant temporellement située entre ladite première trame d'entrée et la première trame issue d'une seconde image d'entrée, une troisième trame de sortie étant temporellement située entre les deux trames d'entrée issues de ladite seconde image d'entrée, les coefficients d'interpolation utilisés par lesdits filtres temporels sont de 1/2 pour ladite seconde trame de sortie.

L'utilisation de coefficients 1/2 permet d'obtenir une réduction notable des mouvements saccadés par rapport à l'utilisation de coefficients 1/3 et 2/3 tirés de la position relative de la seconde trame de sortie entre les deux premières trames d'entrée.

Selon un mode de réalisation particulier, les pixels de ladite troisième trame de sortie sont les pixels de la seconde image d'entrée.

Dans le cas particulier de la conversion dite "mode film", la troisième trame de sortie correspond en fait à la seconde image d'entrée. Celle-ci aura éventuellement subi les réductions de bruit mentionnées dans la description de l'exemple de réalisation particulier.

Selon un mode de réalisation particulier, lorsque le vecteur de mouvement associé à un pixel à interpoler est nul et que la confiance dans ce vecteur dépasse un seuil donné, alors la valeur du pixel à interpoler est la valeur finale obtenue par filtrage médian entre premièrement les deux valeurs de pixels obtenues en retirant, respectivement ajoutant la confiance du vecteur de mouvement ramenée au pixel divisée par un facteur correctif à la valeur du pixel de même position que le pixel à interpoler dans, selon le cas, la trame d'entrée précédente ou la trame d'entrée suivante, et deuxièmement une valeur de repli qui résulte d'un filtrage linéaire temporel et horizontal sur les pixels des lignes des trames d'entrée précédente et suivante de position identique à la ligne contenant le pixel à interpoler, un filtrage spatial vertical étant effectué le cas échéant sur les lignes non définies des trames d'entrée.

Selon un mode de réalisation particulier, la valeur de repli est égale à:

$$\text{Fallback}(x,y) = \frac{1}{16}(1\ \ 2\ \ 3\ \ 4\ \ 3\ \ 2\ \ 1)\left[ m\begin{pmatrix} P(x-3,y,0) \\ P(x-2,y,0) \\ P(x-1,y,0) \\ P(x,y,0) \\ P(x+1,y,0) \\ P(x+2,y,0) \\ P(x+3,y,0) \end{pmatrix} + (1-m)\begin{pmatrix} P(x-3,y,\frac{1}{2}) \\ P(x-2,y,\frac{1}{2}) \\ P(x-1,y,\frac{1}{2}) \\ P(x,y,\frac{1}{2}) \\ P(x+1,y,\frac{1}{2}) \\ P(x+2,y,\frac{1}{2}) \\ P(x+3,y,\frac{1}{2}) \end{pmatrix}\right]$$

où "0" désigne la trame d'entrée précédant la trame à interpoler et "1/2" la trame d'entrée suivant la trame à interpoler, et où m représente un coefficient de pondération dépendant de la position temporelle de la trame à interpoler entre les trames d'entrée.

Selon un mode de réalisation particulier, l'interpolation d'un pixel d'une ligne de parité donnée d'une trame dont les lignes de parité opposée sont égales aux lignes d'une trame d'entrée est réalisée, lorsque le vecteur de mouvement associé n'est pas nul ou que la confiance accordée à ce vecteur est faible, moyennant un filtrage médian portant sur les valeurs obtenues

premièrement par un filtrage linéaire vertical,
deuxièmement par un filtrage médian spatio-temporel vertical sur deux pixels et compensé en mouvement sur un pixel et
troisièmement par un filtrage médian spatio-temporel portant sur quatre pixels en croix et compensé en mouvement sur un pixel.

Ce type de filtrage à deux niveaux présente les mêmes types d'avantage que ceux présentés pour le filtre précédent. En outre, de par la présence de filtres médians selon une direction verticale et deux directions diagonales, une bonne restitution des structures fines dans ces directions est assurée.

L'influence des pixels de l'image d'entrée courante est forte: la majorité des pixels utilisés appartiennent à cette image. Ceci réduit l'effet d'erreurs d'estimation de mouvement.

Selon un mode de réalisation particulier, ledit filtrage linéaire vertical est le suivant:

$$F1(x,y) = \frac{1}{2}\left( P\left[ \begin{pmatrix} x \\ y-1 \end{pmatrix}, 0 \right] + P\left[ \begin{pmatrix} x \\ y+1 \end{pmatrix}, 0 \right] \right)$$

où "0" représente la position temporelle de la trame à interpoler.

Selon un mode de réalisation particulier, ledit filtrage spatio-temporel vertical sur deux pixels et compensé en mouvement sur un pixel est:

$$F2(x,y) = med\left( P\left[ \begin{pmatrix} x \\ y-1 \end{pmatrix}, 0 \right]; P\left[ \begin{pmatrix} x \\ y+1 \end{pmatrix}, 0 \right]; P\left[ \begin{pmatrix} x+v_x \\ y+v_y \end{pmatrix}, \frac{1}{2} \right] \right)$$

où Vx et Vy sont les coordonnées d'un vecteur de mouvement associé au pixel à interpoler, et où "0" représente la trame à interpoler et "1/2" la trame d'entrée suivante.

Selon un mode de réalisation particulier, ledit filtrage spatio-temporel portant sur quatre pixels en croix et sur un pixel compensé en mouvement est:

$$F3(x,y) = med\left( P\left[ \begin{pmatrix} x-1 \\ y-1 \end{pmatrix}, 0 \right]; P\left[ \begin{pmatrix} x-1 \\ y+1 \end{pmatrix}, 0 \right]; P\left[ \begin{pmatrix} x+1 \\ y-1 \end{pmatrix}, 0 \right]; P\left[ \begin{pmatrix} x+1 \\ y+1 \end{pmatrix}, 0 \right]; P\left[ \begin{pmatrix} x+v_x \\ y+v_y \end{pmatrix}, \frac{1}{2} \right] \right)$$

Selon un mode de réalisation particulier, lorsque le vecteur de mouvement associé à un pixel à interpoler est nul et que la confiance dans ce vecteur est supérieure à un seuil donné, alors ledit pixel prend la valeur du pixel de même position dans la trame d'entrée suivante.

D'autres caractéristiques et avantages de l'invention apparaîtront à travers la description de l'exemple de réalisation non limitatif décrit dans ce qui suit et illustré à l'aide des figures parmi lesquelles:

- la figure 1 est un diagramme représentant les trames d'entrée et de sortie du présent procédé par rapport à l'axe du temps,
- la figure 2 est un diagramme bloc d'un dispositif mettant en oeuvre le procédé conforme au présent exemple de réalisation,

- la figure 3 représente un chronogramme des trames à certains points du dispositif de la figure 2,
- la figure 4 représente une image comportant des structures périodiques, ainsi qu'un exemple de vecteurs de mouvement pouvant être générés pour une telle image,
- la figure 5 représente un histogramme des erreurs d'une ligne d'une matrice d'erreur liée à une composante verticale d'un vecteur de mouvement donnée et contenant la plus petite erreur de la matrice,
- la figure 6 illustre le procédé mis en oeuvre pour tenir compte de blocs périodiques dans la détermination du champ de vecteurs de mouvement d'une image,
- la figure 7 représente deux filtres passe-bas,
- la figure 8 représente les trames 1, 2 et 2/3 et la position d'un sous-bloc par rapport aux blocs principaux dont les vecteurs sont sélectionnés en tant que vecteurs candidats pour le sous-bloc,
- la figure 9 représente les trames 1, 2/3 et 3 et la position d'un bloc intermédiaire par rapport aux blocs principaux dont les vecteurs sont utilisés en tant que vecteurs candidats,
- la figure 10 (a) représente une fonction non linéaire utilisée par le procédé de réduction de bruit temporelle récursive,
- la figure 10 (b) est un diagramme bloc d'un filtre de réduction de bruit temporelle récursive,
- la figure 11 représente un filtre spatio-temporel de type médian utilisé pour l'interpolation de la trame 1,
- la figure 12 illustre un problème lié à la présence de structures périodiques dans l'image;
- la figure 13 donne deux exemples de mise en oeuvre du filtre spatio-temporel utilisé pour l'interpolation de la trame 2,
- la figure 14 donne deux exemples de mise en oeuvre du filtre spatio-temporel utilisé pour l'interpolation de la trame 3,
- la figure 15 représente un chronogramme des trames à certains points du dispositif de la figure 2 lors du mode film, et
- la figure 16 comprend trois schémas (a,b,c) de trames par rapport au temps illustrant respectivement le mode de fonctionnement normal pour des trames vidéo, le mode de fonctionnement normal pour des trames film et le mode de fonctionnement spécifique pour des trames film.

L'invention sera expliquée en relation avec un procédé de conversion de fréquence d'images de télévision de 50 Hz entrelacés à 75 Hz progressifs.

Deux demandes de brevet déposées conjointement le même jour traitent d'autres aspects de ce procédé.

Conventions

Une période est définie comme étant l'intervalle temporel permettant d'afficher une trame de sortie, soit 1/75 secondes. Un cycle est défini comme étant l'intervalle de temps nécessaire pour un cycle complet de l'algorithme, soit trois périodes ou 1/25 secondes.

Le procédé se répète identique à lui-même toutes les trois trames de sortie ou toutes les deux trames d'entrée. Par convention, la première trame de sortie porte le numéro 1, la deuxième trame porte le numéro 2, et ainsi de suite. Mais du fait que le traitement est cyclique, les trames 1, 4, 7 ... seront générées de façon identique; on les appellera des trames de type 1. De même, les trames 2, 5, 8 ..., respectivement les trames 3, 6, 9... seront générées de façon identique et respectivement appelées trames de type 2 et 3.

Par convention, les trames d'entrée seront numérotées par référence à la position qu'elles occupent vis-à-vis des trames de sortie. Ainsi, une trame d'entrée correspondant temporellement à une trame de sortie portera le même numéro que cette trame de sortie. Une trame d'entrée située entre deux trames de sortie portera les numéros de ces deux trames: par exemple, une trame d'entrée située entre les trames de sortie 2 et 3 sera appelée trame 2/3.

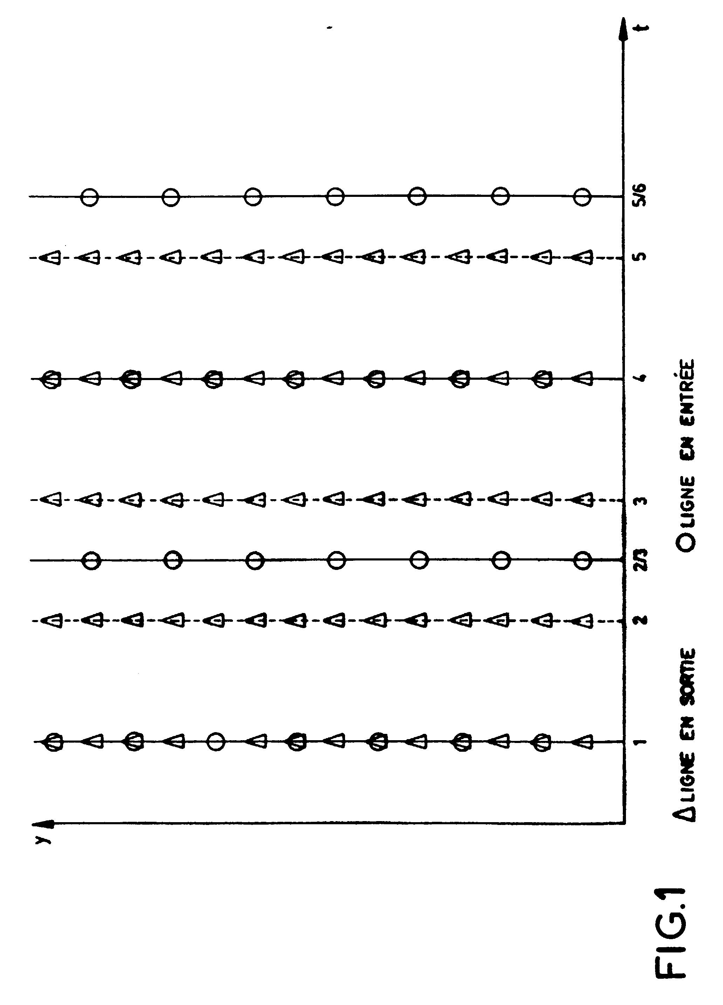

La figure 1 illustre les positions respectives des trames d'entrée et de sortie.

La trame d'entrée numéro 1 comporte la première ligne affichée à l'écran d'un téléviseur; elle a été indicée ligne 0. Cette trame, donc la trame d'entrée impaire, est formée des ligne 0, 2, 4, ..., 624. Une trame 2/3, paire, comportera les lignes 1, 3, 5, ..., 623. La variable y représentera les numéros de ligne, croissantes du haut vers le bas de l'écran, dans le sens du balayage. La variable x sera utilisée pour désigner l'abscisse d'un pixel et croît de gauche à droite également dans le sens du balayage. t représentera le temps, normalisé de façon à ce qu'une unité temporelle représente un cycle. La trame 1 sera située au temps 0, la trame 2/3 au temps 1/2 et la trame 4 au temps 1.

Les trames de sortie comporteront tous les numéros de ligne, puisque ce sont des trames progressives. Le signal de luminance à la position d'un pixel donné sera représenté par la variable $P(x,y,t)$.

Schéma général

Avantageusement, le procédé de conversion décrit et le dispositif de mise en oeuvre ne nécessitent qu'une seule mémoire de trame. Cette contrainte s'explique par le fait que le procédé est destiné à être implémenté dans des appareils grand public fabriqués en grande série. La réduction du coût de mise en oeuvre du point de vue matériel est donc un facteur important.

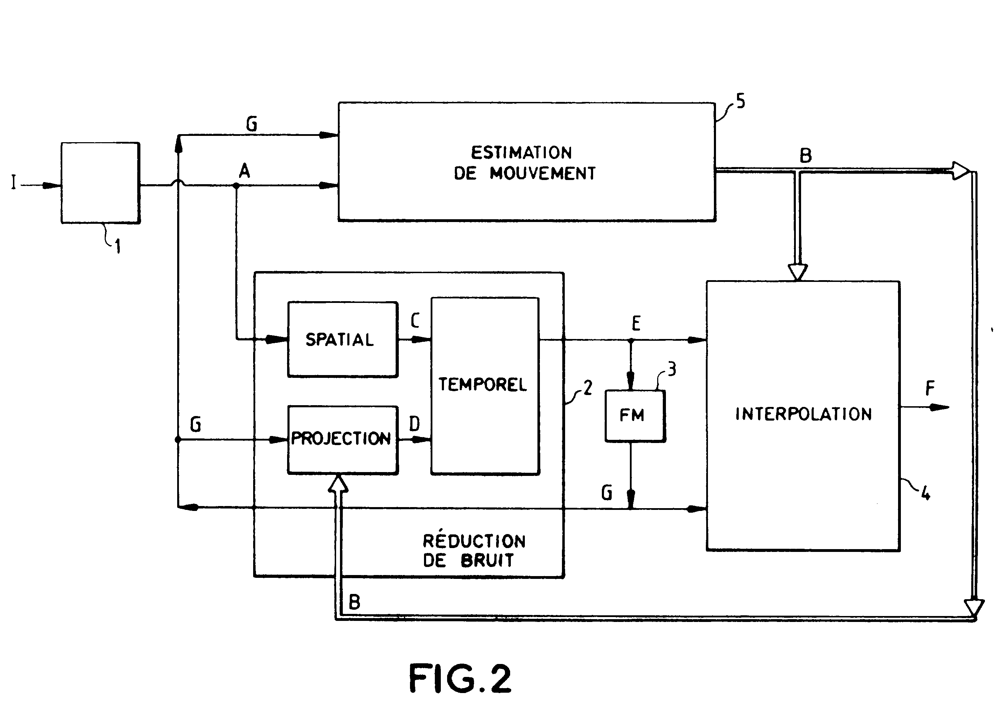

La figure 2 est un diagramme bloc du dispositif de mise en oeuvre de l'invention. Chaque élément sera vu en détail par la suite.

Le dispositif comporte une mémoire vive 1 organisée en FIFO et destinée à augmenter la fréquence des trames de 50 à 75 Hz, en répétant en lecture une trame sur deux. La mémoire 1 reçoit donc en entrée des trames à la fréquence de 50 Hz et fournit des trames à la fréquence de 75 Hz.

Le dispositif comporte d'autre part un circuit de réduction de bruit 2, comprenant deux filtres: un filtre spatial destiné à réduire principalement les bruits de type impulsionnel, et un filtre temporel récursif. Le filtre spatial reçoit les trames issues de la mémoire 1, puis transmet les trames filtrées au filtre temporel. Le filtre temporel reçoit également une trame dite trame projetée, composée d'informations de trames précédemment traitées. Le fonctionnement du filtre temporel sera vu plus en détail ultérieurement.

Une trame filtrée temporellement est stockée dans une mémoire trame 3 et transmise à un interpolateur 4. L'interpolateur 4 réalise l'interpolation entre deux trames d'entrée pour fournir les trames de sortie du dispositif. L'interpolateur 4 reçoit des vecteurs de mouvement de la part d'un circuit d'estimation de mouvement 5. L'estimation de mouvement est réalisée entre la trame stockée dans la mémoire de trame 3 et la trame "courante" lue dans la mémoire 1. Un certain nombre d'informations relatives à l'estimation de mouvement sont utilisées lors de la réduction de bruit.

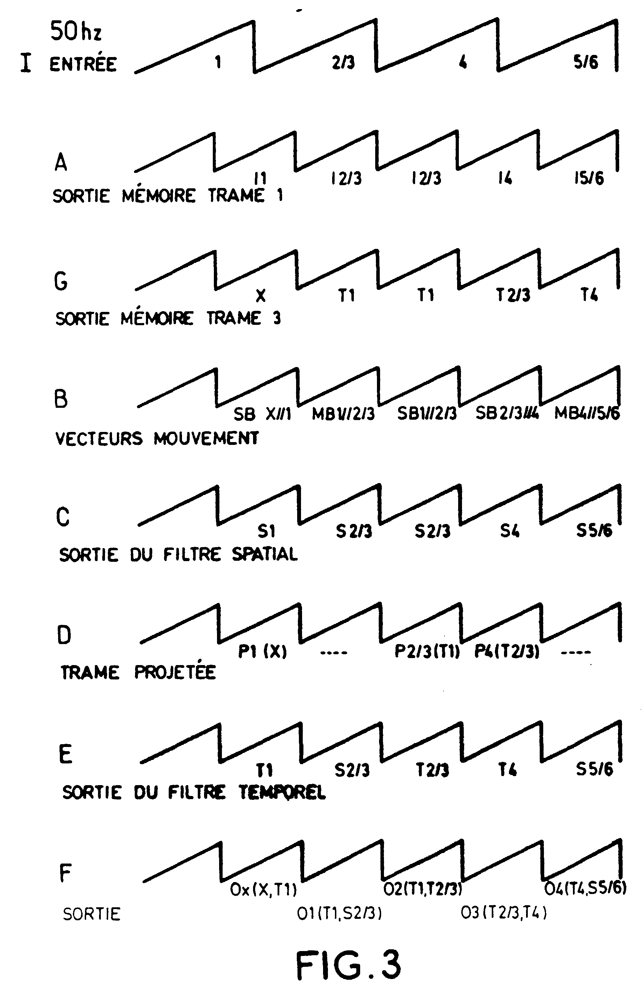

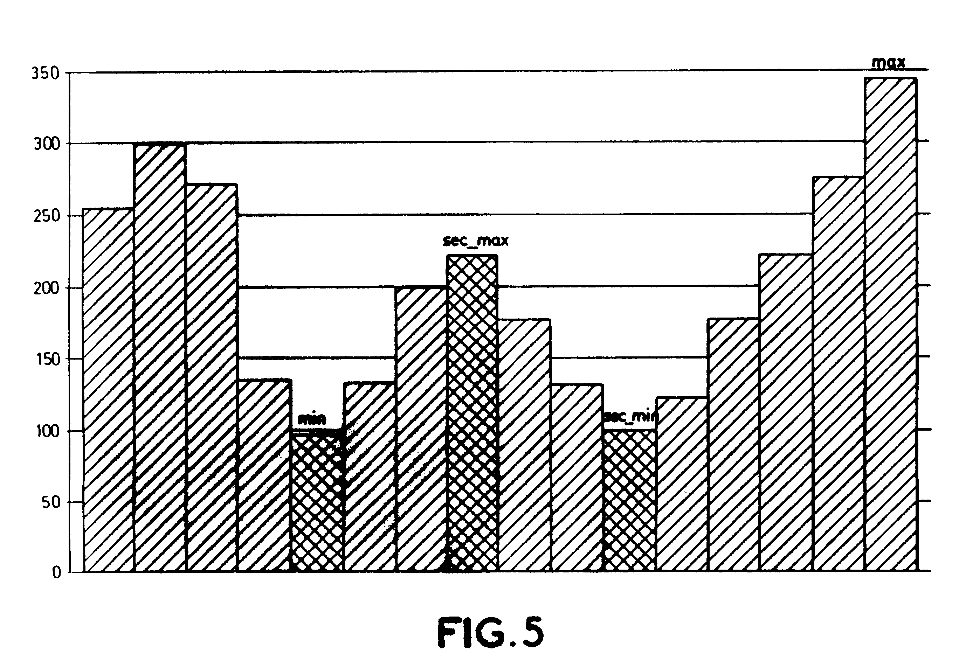

La figure 3 comporte les chronogrammes relatifs aux trames traitées par les différents éléments du dispositif de la figure 5. Les lettres identifiant chaque chronogramme correspondent aux lettres identifiant les connexions entre les éléments de cette dernière figure.

Une trame est représentée sous la forme d'une dent de scie correspondant au balayage de cette trame.

Le premier chronogramme (I) correspond aux trames d'entrée de la mémoire 1, c'est à dire aux trames entrelacées à 50 Hz. La trame 1 est impaire, la trame 2/3 est paire etc...

Le second chronogramme (A) correspond à la sortie de la mémoire 1: les trames sont relues à une vitesse de 75 Hz. La trame 1 (et les trames 4, 7 ...) est lue une fois, la lecture débutant avant même que l'écriture ne soit achevée. La trame 2/3 (et les trames 5/6, 8/9 ...) est lue deux fois.

Le troisième chronogramme (G) représente la sortie de la mémoire trame 3. Cette mémoire maintient un écart temporel d'une trame entre sa trame d'entrée et celle à sa sortie, pour que l'interpolation puisse se faire correctement. Dans ce but, la mémoire ne se comporte pas simplement comme un retard d'une trame. Si cela était le cas, la trame filtrée 2/3 serait à la fois présente à l'entrée de la mémoire et à sa sortie. C'est donc la trame filtrée 1 qui est répétée deux fois à la sortie de la mémoire de trame.

Le quatrième chronogramme (B) représente les périodes de calcul des informations fournies par l'estimateur de mouvement au reste du dispositif. Comme on le verra plus en détail par la suite, l'estimateur de mouvement se comporte différemment à chaque période d'un cycle donné. Pour les trames de type 1, des vecteurs de mouvement grossiers sont calculés (référence "MB") pour des blocs larges (appelés blocs principaux), tandis que des vecteurs de mouvement plus fins sont déterminés pour les deux autres trames (référence "SB") pour des sous-blocs des blocs principaux. Le calcul des vecteurs pour les sous-blocs se base sur les vecteurs grossiers des blocs principaux. La référence "MB1//2/3" du chronogramme indique par exemple la période de l'estimation de mouvement "grossière" entre la trame 1 et la trame 2/3.

Le cinquième chronogramme (C) concerne la sortie du filtre spatial du circuit de réduction de bruit. Ce filtrage se fait directement sur la trame lue dans la mémoire 1.

Le sixième chronogramme (D) représente la trame projetée comparée par le circuit de réduction de bruit à la trame filtrée spatialement.

Le septième chronogramme (E) indique la sortie du filtre temporel et par conséquent l'entrée de l'interpolateur 4 et de la mémoire de trame 3.

Le dernier chronogramme indique la sortie de l'interpolateur et donc la sortie du dispositif en soi.

Estimateur de mouvement

L'estimateur de mouvement travaille selon le procédé de comparaison par blocs hiérarchisée. Ce procédé se déroule en deux étapes. On commence par diviser l'image en blocs grossiers ou blocs principaux de 16∗32 pixels dont on détermine le mouvement, puis on divise ces blocs principaux en sous-blocs pour affiner le champ des vecteurs.

L'estimation est effectuée pour le signal de luminance, qui contient généralement des informations suffisantes pour décrire le mouvement des objets sur l'écran. Bien entendu, il est possible d'utiliser également l'information de chrominance ou de combiner les informations de chrominance et de luminance pour l'estimation.

Avant toutes choses, on procède à un sous-échantillonnage des trames d'entrée par un facteur 2 dans les directions horizontales et verticales. On divise ainsi par quatre les calculs nécessaires à l'estimation. Les trames sous-échantillonnées ne seront cependant utilisées que pour l'estimation de mouvement. L'interpolation des trames de sortie se fera à partir des trames complètes.

Ce sous-échantillonnage restreint naturellement les composantes des vecteurs de mouvement à des valeurs paires. Ceci n'est pas gênant dans le sens vertical, puisque cette contrainte est déjà imposée par l'entrelacement des trames à la diffusion.

Lors du sous-échantillonnage, on ne gardera que les lignes impaires et les colonnes paires. On continuera cependant à repérer les points de l'image à l'aide du système de coordonnées utilisé jusqu'ici, en s'interdisant les pixels n'appartenant pas au domaine sous-échantillonné.

Selon le présent mode de réalisation, avant de procéder au sous-échantillonnage, on applique à la trame un filtre passe-bas destiné à supprimer les hautes fréquences spatiales, sources de superposition spectrale. Pour ce faire, en horizontal, on utilise par exemple une fenêtre triangulaire à sept coefficients:

$$\text{Phorizontal}(x,y,t) = \frac{1}{16}\begin{bmatrix} 1 & 2 & 3 & 4 & 3 & 2 & 1 \end{bmatrix}\begin{bmatrix} P(x-3,y,t) \\ P(x-2,y,t) \\ P(x-1,y,t) \\ P(x,y,t) \\ P(x+1,y,t) \\ P(x+2,y,t) \\ P(x+3,y,t) \end{bmatrix}$$

Dans la direction verticale, on procède également à un filtrage. Comme on ne garde que les lignes impaires, cela correspond aux numéros de lignes verticalement interpolées de la trame d'entrée 1 et aux numéros des lignes d'entrée de la trame 2/3. Afin d'harmoniser les contenus spectraux des deux trames d'entrée sous-échantillonnées, on procède à un filtrage passe-bas de la trame d'entrée 2/3:

$$\text{Psous}-\text{échantillonné}(x,y,\tfrac{1}{2}) = \frac{1}{4}\begin{bmatrix} \text{Phorizontal}(x,y-2,\tfrac{1}{2}) \\ +2\text{Phorizontal}(x,y,\tfrac{1}{2}) \\ +\text{Phorizontal}(x,y+2,\tfrac{1}{2}) \end{bmatrix}$$

Pour les trames de type 1, on génère des lignes impaires en utilisant une simple moyenne verticale:

$$\text{Psous-échantillonné }(x,y,0) = \tfrac{1}{2}[\text{ Phorizontal}(x,y\text{-}1,0) + \text{Phorizontal}(x,y\text{+}1,0)]$$

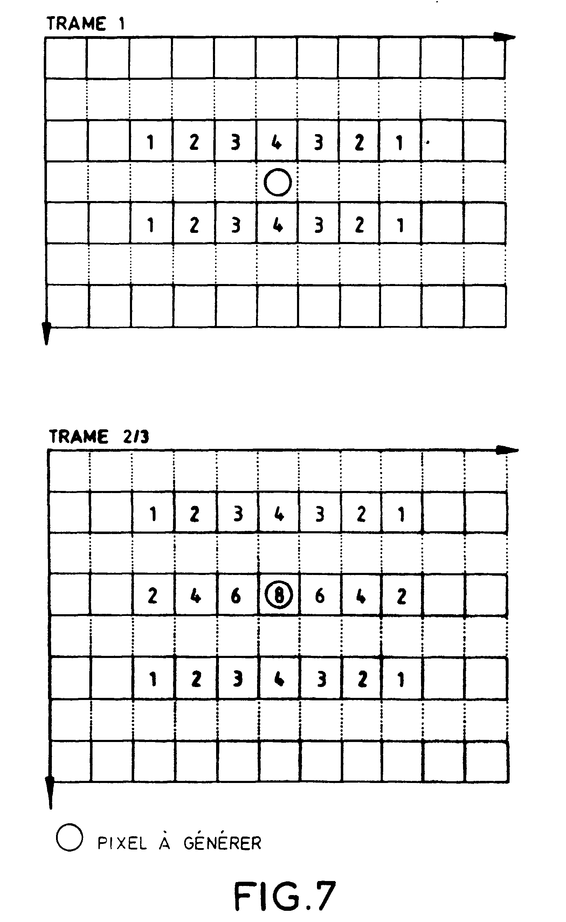

Les fonctions Psous - échantillonné$(x,y,0)$ et Psous-échantillonné$(x,y,\tfrac{1}{2})$ ne sont définies que pour x pair et y impair. Pour simplifier, les trames sous-échantillonnées seront notées P'(x,y,t). Les filtres utilisés sont représentés à la figure 7.

Comme cela a déjà été mentionné, le procédé d'estimation hierarchisé se comporte différemment pendant les trois périodes d'un cycle:

- pendant la période 1, on calcule les vecteurs correspondant aux blocs principaux, représentatifs du mouvement entre les trames 1 et 2/3,
- pendant la période 2, on calcule les vecteurs correspondant aux sous-blocs, représentatifs de façon plus précise du mouvement entre les trames 1 et 2/3, le calcul se faisant à l'aide des vecteurs déterminés pendant la période 1,
- pendant la période 3, on calcule les vecteurs correspondant aux sous-blocs, représentatifs du mouvement entre les trames 2/3 et 4. Dans ce dernier cas, le calcul se fait à partir de vecteurs de blocs intermédiaires, qui sont constitués de valeurs rafraîchies des vecteurs correspondant aux blocs principaux.

Détermination du champ de vecteurs grossiers entre les trames 1 et 2/3

L'image est tout d'abord découpée en blocs principaux de 32*16 pixels. Comme la taille d'une image active est de 720*576 pixels pour la fréquence d'échantillonnage standard, on a ainsi 23 blocs principaux par ligne et 36 par colonne.

Pour un bloc principal indicé (i,j) avec i compris entre 0 et 22 et j compris entre 0 et 35 et appartenant par définition à la trame d'arrivée (la trame temporellement la plus récente), donc une trame 2/3 ou équivalente, on définit l'erreur commise pour un vecteur de mouvement (u,v) par:

$$E_{(i,j)}(u,v) = \sum_{\substack{k=0,2,4,\ldots,30 \\ l=0,2,\ldots,14}} \left| P'\left[\begin{pmatrix} M_x*i+k \\ M_y*j+l \end{pmatrix}, t\right] - P'\left[\begin{pmatrix} M_x*i-u \\ M_y*j-v \end{pmatrix}, t-1/2\right] \right|$$

avec Mx = 32, taille en abscisse d'un bloc principal,
et My = 16, taille en ordonnée d'un bloc principal.

On calcule alors la matrice des erreurs pour chaque bloc principal: chaque élément de cette matrice correspond à une erreur liée à un vecteur de mouvement possible, soit:

Err(i,j) = (E(i,j)(u,v)) pour u= -16,-14,...,14,16;v= -4,-2,0,2,4

Les composantes des vecteurs de mouvement sont paires et comprises respectivement entre -16 et +16, et -4 et +4. On compare donc le bloc principal considéré à des blocs d'une fenêtre de recherche d'une trame précédente, cette fenêtre de recherche étant située autour de la position du bloc principal rapportée à cette trame précédente. Le vecteur retenu parmi l'ensemble des vecteurs est note (u',v') et correspond au minimum de la fonction d'erreur.

Errmin = min(E(i,j)(u,v)) = Err(i,j)(u',v')

pour u= -16,-14,..., 14,16 et v= -4,-2,0,2,4

Le champ de vecteurs de l'image entière est calculé en balayant, bloc par bloc, et en appliquant cette recherche à chaque bloc principal.

On procède par ailleurs lors du calcul du champ de vecteurs de niveau bloc principal à une estimation du bruit de l'image. On calcule pour ce faire une valeur supplémentaire: l'erreur maximale de la matrice:

Errmax= max($E_{(i,j)}$(u,v)) pour u= -16,-14,..., 14,16;v= -4,-2,0,2,4

Errmin représente une estimation de la somme de deux bruits: le bruit inhérent au signal de luminance, et le bruit de quantification des vecteurs de mouvement. En effet, si le vecteur de mouvement que l'on a calculé correspond bien au mouvement réellement présent dans l'image, Errmin sera la somme des différences de luminosité existant dans deux surfaces identiques de la taille d'un bloc principal: ces différences auront alors pour unique origine le bruit de l'image.

Par contre, si du fait de la quantification des vecteurs possibles, le mouvement est mal représenté par le vecteur calculé, alors s'ajoutera au bruit précédent une composante due à l'erreur faite sur ce vecteur: Errmin sera trop sévère pour définir le bruit réel de l'image.

On définit par conséquent un second estimateur, à savoir Errmax-Errmin. Il est lui aussi fonction du bruit de quantification de l'image. Sur une zone uniforme, la différence entre l'erreur maximale et l'erreur minimale provient uniquement du bruit de l'image. Si le bruit de quantification est fort, alors Errmin et Errmax sont affectés tous les deux; on peut espérer que cet estimateur est moins sensible au bruit de quantification, éliminé par la différenciation.

On définit d'autre part deux estimateurs Errminabs et Noiseest:

$$Err\min abs = \min\left\{Err\min(i,j),(Err\max-Err\min)(i,j)\right\}$$
$$i = 0,\ldots,22$$
$$j = 0,\ldots,35$$

$$Noiseest = \min_{i,j}\left\{Err\min(i,j)\right\}$$

Corrections apportées aux calculs de la période 1

Selon une variante de réalisation, une première correction est apportée lorsque l'image comporte des zones uniformes.

Sur une zone uniforme, comme un morceau de ciel bleu, la matrice des erreurs est approximativement constante. Les fluctuations sont dues à la présence de bruit dans l'image. Le vecteur calculé par l'intermédiaire du procédé conforme à l'invention est donc imprévisible, et il peut en résulter une forte hétérogénéité du champ de vecteurs, ce qui est préjudiciable à la suite du procédé. En présence de telles hétérogénéités, on décide de forcer le vecteur correspondant à zéro.

Ce forçage est en fait réalisé composante par composante. En effet, si on considère une frontière horizontale dans l'image (une falaise surmontée de ciel bleu par exemple), la composante u du vecteur de mouvement n'est pas fixée car les erreurs sont constantes sur chaque ligne de la matrice. On force donc cette composante à zéro. De même pour la composante v en cas de frontière verticale.

Selon le présent exemple de réalisation, le critère employé pour déterminer si une composante de vecteur doit être forcée à zéro est lié au niveau de bruit calculé ci-dessus.

Si Err(i,j)(0,v)-Err(i,j)(u,v)<Errminabs*seuil_x alors u = 0

Si Err(i,j)(u,0) -Err(i,j)(u,v) <Errminabs*seuil_ y alors v = 0

avec

$$Errminabs = \min\left\{Errmin(i,j),(Errmax-Errmin)(i,j)\right\}$$
$$i = 0,\ldots,22$$
$$j = 0,\ldots,35$$

Les valeurs seuil_x et seuil_y sont par exemple égales à des multiples de 2: 2, 4, 8...

En clair, si la différence entre les erreurs engendrées par le vecteur de composante nulle et le vecteur trouvé par l'estimation de mouvement est du même ordre de grandeur que le bruit estimé inhérent à l'image, alors la correction est apportée.

Selon le présent exemple de réalisation de l'invention, une correction est apportée lorsque l'image contient des structures périodiques.

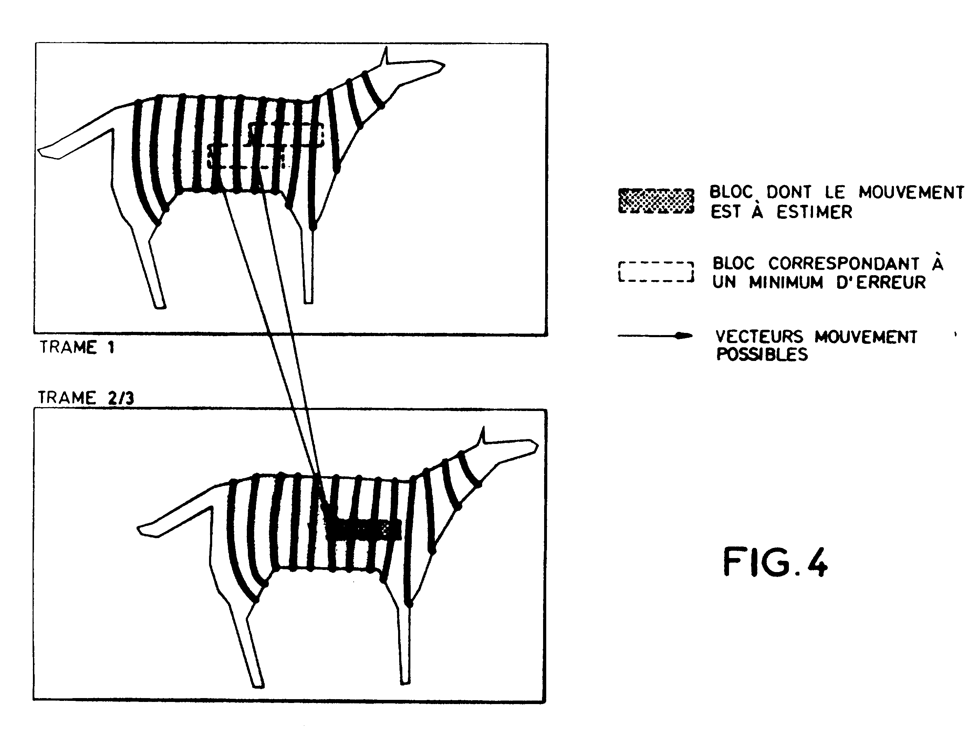

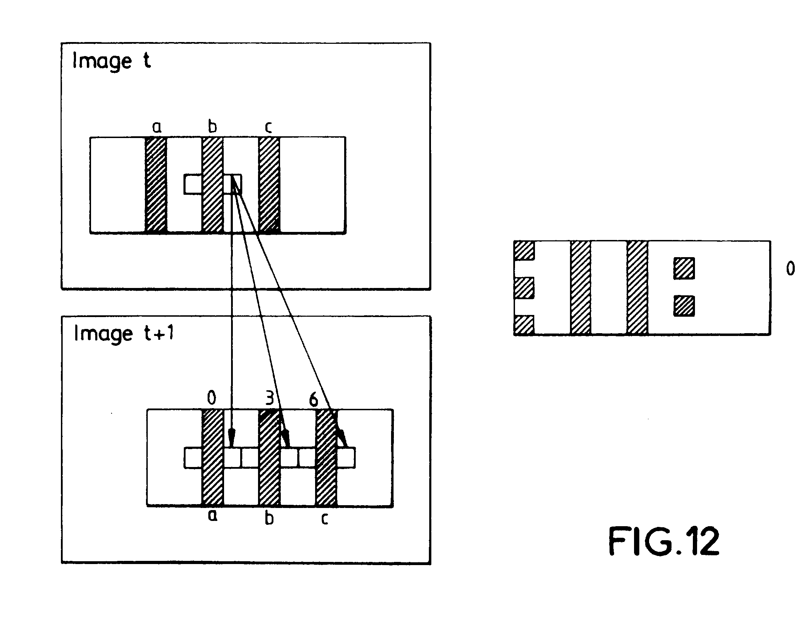

Le problème posé par ce genre de structure a déjà été abordé en introduction. Les figures 4 et 12 permettent cependant de le préciser pour mieux comprendre la détection et la correction envisagées.

Le bloc en grisé de la figure 4 représente le bloc dont le mouvement est à déterminer, tandis que les deux blocs en pointillé représentent deux blocs dans l'image de référence donnant lieu à un minimum d'erreur dans la matrice des erreurs. Un vecteur incorrect générera des défauts très perceptibles lors de l'interpolation des trames de sortie.

Ces défauts sont illustrés en gros plan par la figure 12, où le vrai mouvement d'un bloc entre deux trames de parité opposée est donné par un vecteur ayant une composante horizontale de +2. Si le vecteur de mouvement est nul, alors les défauts illustrés dans la partie droite de la figure apparaissent lors de l'entrelaçage. La hauteur des lignes a été exagérée pour bien montrer les défauts.

Dans le cadre du présent exemple de réalisation, on se restreindra à une périodicité horizontale (par exemple un zèbre à rayures verticales), étant donné que la taille des blocs principaux et la gamme des composantes verticales possibles des vecteurs de mouvement rendent peu probable ce type d'erreur dans la direction verticale. La gamme des composantes verticales est trop restreinte pour permettre une détection ou une correction efficace. Néanmoins, l'homme du métier pourra facilement adapter la correction décrite ci-après à notamment une périodicité verticale.

Deux étapes seront maintenant abordées: la détection, puis la correction de ce type d'erreur.

La détection de ce type de défaut est effectuée à partir de la matrice des erreurs Err. En effet, la ligne contenant le minimum des éléments de la matrice contiendra aussi un ou plusieurs minima secondaires comme expliqué ci-dessus.

Tout d'abord, on extrait de la matrice la ligne (Row(u)) des erreurs contenant le minimum avec $-16 <= u <= +16$. Soit umin l'indice du minimum dans Row(u). On commence par détecter le minimum secondaire. Il se caractérise comme étant un minimum local:

$$Row(u-1) > Row(u) \text{ et } Row(u + 1) > Row(u)$$

Parmi les minima secondaires répondant au critère, on ne retient que le plus petit. Soit Usec_min son indice dans la ligne Row(u). On détecte ensuite le maximum secondaire, situé entre les positions umin et usec_min. Il se caractérise comme étant un maximum local:

$$Row(u-1) < Row(u) \text{ et } Row(u + 1) < Row(u)$$

Parmi les maxima secondaires répondant au critère, on ne retient que le plus grand. Soit usec_max son indice dans Row(u).

L'histogramme de la figure 5 représente un exemple caractéristique d'une telle situation.

On soumet le minimum secondaire et le minimum absolu, ainsi que le maximum secondaire à deux tests supplémentaires pour s'assurer de la présence d'une structure périodique:

- les deux minima doivent être proches en valeur (C1),
- la différence entre eux et le maximum secondaire doit être significative par rapport au niveau de bruit courant (C2).

Ces précautions doivent être prises pour éviter que ne soit considéré comme périodique un bloc principal au bord du zèbre. En effet, un bloc principal peut être à cheval sur le bord du zèbre, une moitié appartenant à l'animal, l'autre à la savane. Ce bloc peut donner un minimum d'erreur, qui sera cependant supérieur aux minima liés à une périodicité. On évite aussi ainsi de considérer comme périodique une matrice d'erreur bruitée.

On notera:

Errmax = Row(umax)
Errmax = Row(umax)
Err_sec_min = Row(usec_min)
Err_sec_max = Row(usec_max)

On impose les conditions suivantes:

(C1) $Err\_sec\_min - Errmin < a*Errmax$
(C2) $Err\_sec\_max - Err\_sec\_min > b*Errminabs$
(C3) $Errmax > c*Errminabs$

Selon le présent exemple, on prendra

a=0.5
b=2
c = 4

Une ligne d'erreur vérifiant toutes les conditions sera issue d'une matrice associée à un bloc contenant vraisemblablement une structure périodique.

Selon une variante de réalisation, on combine uniquement les deux premières conditions.

Il s'agit ensuite de corriger le vecteur associé à ce bloc principal.

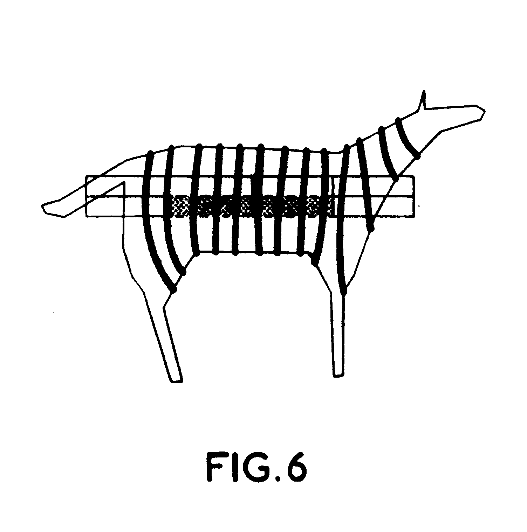

Pour cela, il ne suffit pas de prendre en compte uniquement le bloc principal périodique. Si l'on se rapporte au dessin du zèbre, en supprimant par la pensée toute la partie de l'animal qui n'est pas comprise dans le bloc principal, on obtient un rectangle avec des rayures verticales. En cherchant à quelle partie de l'image précédente correspond ce rectangle, on trouvera plusieurs rectangles rayés possibles, sans pouvoir décider lequel devra être pris en compte. Pour faire ce choix, on procède à l'agrandissement progressif du bloc principal pour lever l'incertitude. Le procédé est illustré par la figure 6, où les blocs en grisé sont les blocs périodiques d'une ligne de l'image.

Dans une ligne donnée, la détection d'un bloc principal périodique va signaler que l'on a trouvé toute une zone de l'image contenant une structure périodique. On ne retiendra pas tout de suite le vecteur de mouvement de ce bloc principal; on stockera par contre la matrice d'erreur correspondant à ce bloc.

On passe au bloc principal suivant sur la même ligne. S'il est lui aussi périodique, on stocke à nouveau sa matrice d'erreur. On finira par arriver à la fin de la structure périodique, en l'occurrence le bord droit du zèbre.

Soient (i1,J1) les coordonnées du premier bloc principal périodique rencontré, et (i2,J1) celles du dernier. On procède au cumul membre à membre de toutes les matrices stockées. On obtient une matrice dont les composantes vaudront:

pour tout u∈[-16,-14,...,14,16] et pour tout v∈[-4,...,4]

$$Sum(u,v) = \sum_{\substack{i = i1,i2 \\ j = j1}} Err(i,j)(u,v)$$

On aurait obtenu la même matrice d'erreurs si on avait appliqué l'algorithme de base à un bloc principal de largeur (i2-i1 +1) fois la largeur d'un bloc principal unique. La matrice d'erreur a bien évidemment la même taille.

Cette matrice ne suffit pas encore pour déterminer le bon vecteur de mouvement. Il faut considérer les blocs au début et à la fin de la structure périodique. En effet, ces blocs contiennent en général le bord de la zone périodique en mouvement et permettent donc de lever l'ambiguité des informations contenues dans la matrice d'erreur.

Après avoir déterminé la matrice ci-dessus, on procède de la manière suivante:

- on considère les vecteurs des deux blocs principaux en début et fin de la structure périodique. Pour chacun, on extrait de la matrice Sum l'erreur correspondante. Le vecteur dont l'erreur est la plus petite sera retenu,
- si ce vecteur ne correspond pas à un minimum local de sa ligne de la matrice d'erreur Sum, on sélectionne le minimum de la matrice d'erreur et on retient le vecteur correspondant,
- enfin, pour obtenir un cohérence verticale entre les blocs périodiques adjacents, on teste si un des blocs immédiatement supérieurs à cette rangée de blocs périodiques est également périodique et dans ce cas, on retient son vecteur, à condition toutefois qu'il corresponde bien à un minimum dans la ligne de la matrice d'erreur.

Le vecteur retenu sera ainsi le vecteur utilisé pour l'ensemble des blocs de la structure périodique.

Après avoir effectué la détermination des vecteurs et éventuellement la première et ou la seconde correction, on obtient un champ de vecteurs noté:

$$\overrightarrow{MB}(i,j) \text{ avec } 0 \leq i \leq 22 \text{ et } 0 \leq j \leq 35$$

Affinage de la résolution spatiale du champ de vecteurs

Cette phase du procédé est utilisée deux fois de suite, pendant les périodes 2 et 3.

Il s'agit d'essayer de caractériser plus finement le mouvement en attribuant des vecteurs à des éléments plus petits: les sous-blocs (qui, selon le présent exemple ont une taille de 4*4 pixels). Ceci permettra d'obtenir une meilleure adéquation du champ de vecteurs aux bords d'objets mobiles.

Selon le présent exemple, il y a 180 sous-blocs dans une largeur d'image et 144 sous-blocs en hauteur.

Conformément au présent exemple de réalisation, on ne recalcule pas l'ensemble des erreurs associées à la gamme entière de vecteurs de mouvements possibles comme cela a été fait pour les blocs principaux. On choisit pour chaque sous-bloc des vecteurs candidats parmi les vecteurs des blocs principaux et on détermine l'erreur générée par chacun de ces vecteurs candidats.

Dans le cadre du présent exemple, les vecteurs candidats pour un sous-bloc sont les vecteurs des quatre blocs principaux les plus proches de ce sous-bloc. Le vecteur engendrant l'erreur la plus faible sera attribué au sous-bloc.

Le fait d'utiliser des vecteurs candidats associés à des blocs principaux adjacents au bloc contenant le sous-bloc considéré permet de déterminer précisément les bords des objets mobiles, et par conséquent les frontières des zones de mouvement uniforme: si le bord d'un objet en mouvement dépasse juste un peu dans un bloc principal, le vecteur trouvé pour ce dernier sera un vecteur indiquant l'arrière-plan et non l'objet en mouvement, parce que la plus grande partie des pixels de ce bloc principal appartiennent à cet arrière-plan, dont le mouvement peut être différent de celui de l'objet. Par conséquent, le bord de l'objet ne sera pas reconstitué de manière correcte.

Par contre, si pour les sous-blocs du bord de l'objet, on considère aussi les vecteurs des blocs principaux adjacents, le mouvement de ces sous-blocs sera correctement estimé, puisqu'au moins un des blocs principaux adjacents fera partie de l'objet en question.

<u>Trame 2</u>

On cherche à déterminer le champ de vecteurs minimisant la différence des luminances des sous-blocs entre les trames 1 et 2/3. Cependant, c'est la trame de sortie 2 qui sera finalement affichée. Pour améliorer la précision, on considère par conséquent les sous-blocs comme faisant partie de cette trame 2.

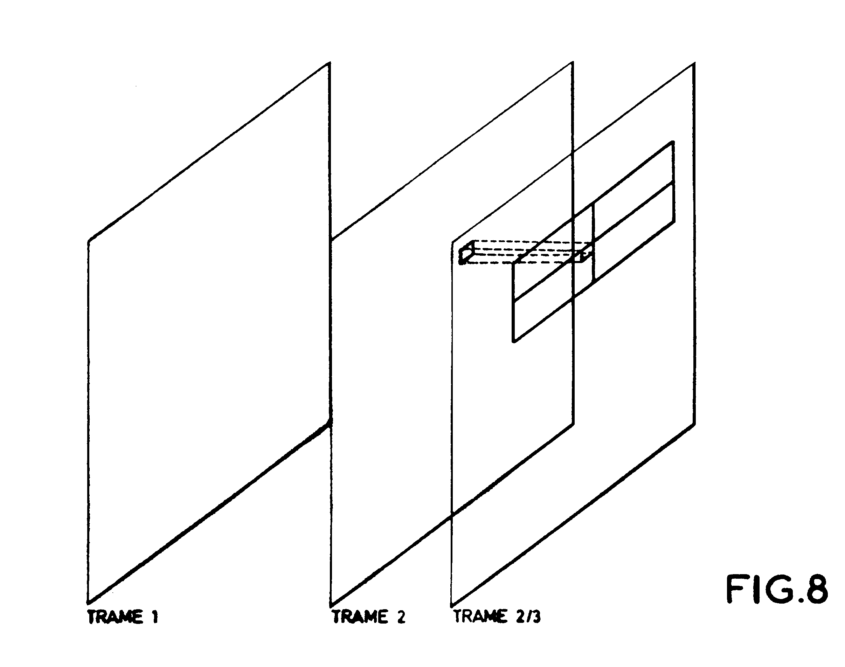

Pour chaque sous-bloc de la trame 2, on détermine quatre blocs principaux adjacents de la manière suivante: on projette orthogonalement le sous-bloc sur la trame 2/3 (voir figure 8). Les quatre blocs les plus proches seront alors choisis comme suit:

Si on parle du sous-bloc (i,j) ($0<i<180$, $0<j<144$), on dira que les 4 blocs principaux pertinents sont:

Si imod8 < 4 alors i'=-1 sinon i'= 1
Si jmod4 < 2 alors j' =-1 sinon j'= 1

$$\text{Rel}_{(i,j)}(1) = \text{MB}(i\vee 8, j\vee 4)$$

$$\text{Rel}_{(i,j)}(2) = \text{MB}(i\vee 8+i', j\vee 4)$$

$$\text{Rel}_{(i,j)}(3) = \text{MB}(i\vee 8, j\vee 4+j')$$

$$\text{Rel}_{(i,j)}(4) = \text{MB}(i\vee 8+i', j\vee 4+j')$$

où le quotient de la division euclidienne de a par b est noté avb et son reste amodb.

Une fois les vecteurs candidats choisis, il faut les comparer entre eux. Comme indiqué plus haut, le sous-bloc fait partie de la trame affichée. Le vecteur du bloc principal en question est donc mis à l'échelle. On commence par en calculer les 2/3, et on arrondit le résultat. On obtient ainsi le vecteur de mouvement entre la trame 1 et la trame 2. Le vecteur restant correspond au mouvement entre la trame 2 et la trame 2/3. Si on appelle ces deux vecteurs respectivement *rear vector* et *front vector,* on a:

Pour m = 1,2,3

$$\text{Rear}_{(i,j)}(m) = \text{int}\left(\frac{2}{3}\cdot \text{Rel}_{(i,j)}(m)\right)$$

$$\text{Front}_{(i,j)}(m) = \text{Rel}_{(i,j)}(m) - \text{Rear}_{(i,j)}(m)$$

On calcule ensuite les quatre erreurs associées à ces quatre vecteurs:
Pour m= 1,2,3,4

$$\text{Err}_{(i,j)}(m) = \sum_{\substack{k=0,2 \\ l=0,2}} \left| P'\left[\begin{pmatrix} S_x \cdot i + k \\ S_y \cdot j + l \end{pmatrix} + \text{Front}_{(i,j)}(m), \frac{1}{2}\right] - P'\left[\begin{pmatrix} S_x \cdot i + k \\ S_y \cdot j + l \end{pmatrix} - \text{Rear}_{(i,j)}(m), 0\right] \right|$$

où Sx et Sy représentent les tailles en pixels en abscisse et en ordonnée d'un sous-bloc.

Le vecteur du sous-bloc sera le vecteur donnant une erreur minimale. En balayant tous les sous-blocs, on obtient un champ de vecteurs noté Raw(i,j).

Selon une variante de réalisation, les composantes des vecteurs de ce champ sont soumises à un filtrage médian pour éliminer les valeurs aberrantes: en effet, une petite erreur sur un sous-bloc est moins visible qu'une hétérogénéité locale du champ de vecteurs.

Soient:

$$a = (1\ 0)\cdot\text{Raw}_{(i-1,j)}; \ a'= (0\ 1)\cdot\text{Raw}_{(i-1,j)}$$

$$b = (1\ 0)\cdot\text{Raw}_{(i,j)}; \ b'=(0\ 1)\cdot\text{Raw}_{(i,j)}$$

$$c = (1\ 0)\cdot\text{Raw}_{(i+1,j)}; \ c'=(0\ 1)\cdot\text{Raw}_{(i+1,j)}$$

Le champ de vecteurs s'écrit alors

$$SB_2(i,j) = \begin{pmatrix} \text{med}(a,b,c) \\ \text{med}(a',b',c') \end{pmatrix}.$$

Le filtrage médian est donc réalisé, pour un sous-bloc donné, en tenant compte du vecteur précédemment calculé pour ce sous-bloc et des vecteurs des sous-blocs horizontalement adjacents.

On obtient donc un champ de vecteurs pour des sous-blocs de 4*4 pixels.

On définit également pour chaque sous-bloc l'erreur associée au vecteur choisi. Cette erreur est une mesure de la confiance accordée à chaque vecteur de mouvement. L'erreur s'écrit:

$$\text{Err}_2(i,j) = \sum_{\substack{k=0,1,2,3 \\ l=0,2}} \left| P'\left[\begin{pmatrix} S_x \cdot i + k \\ S_y \cdot j + l \end{pmatrix} + \text{Front}(i,j), \frac{1}{2}\right] - P'\left[\begin{pmatrix} S_x \cdot i + k \\ S_y \cdot j + l \end{pmatrix} - \text{Rear}(i,j), 0\right] \right|$$

Trame 3

Comme cela a été fait pour la trame 2, un calcul de vecteurs au niveau des sous-blocs est entrepris pour la trame 3, en estimant le mouvement entre les trames 2/3 et 4. Cependant, le calcul est différent de celui précédemment mis en oeuvre. En effet, selon le présent exemple de réalisation, on ne calcule pas de vecteurs de mouvement pour des blocs principaux entre les trames 2/3 et 4, ceci pour des raisons d'économie de lignes à retard. En effet, s'il fallait calculer pour la trame 3 à la fois les vecteurs des blocs principaux et ceux des sous-blocs adjacents, il faudrait, pour un sous-bloc donné, avoir calculé les vecteurs des tous les blocs principaux adjacents, et cela introduirait un retard correspondant approximativement au nombre de lignes contenu dans une rangée de blocs principaux..

Les vecteurs des sous-blocs pour la trame 3 seront calculés à partir du champ de vecteurs précédemment calculé pour les blocs principaux entre les trames 1 et 2/3. Ceci pose des problèmes en cas de mouvements rapides, étant donné que les vecteurs des sous-blocs seront alors calculés à partir de vecteurs ne reflétant plus le mouvement réel.

Selon le présent exemple de réalisation, on rafraîchit les informations concernant les blocs principaux en créant un champ de vecteurs pour des blocs dits bloc intermédiaires, dont la taille est, justement, intermédiaire entre celle d'un bloc principal et celle d'un sous-bloc.

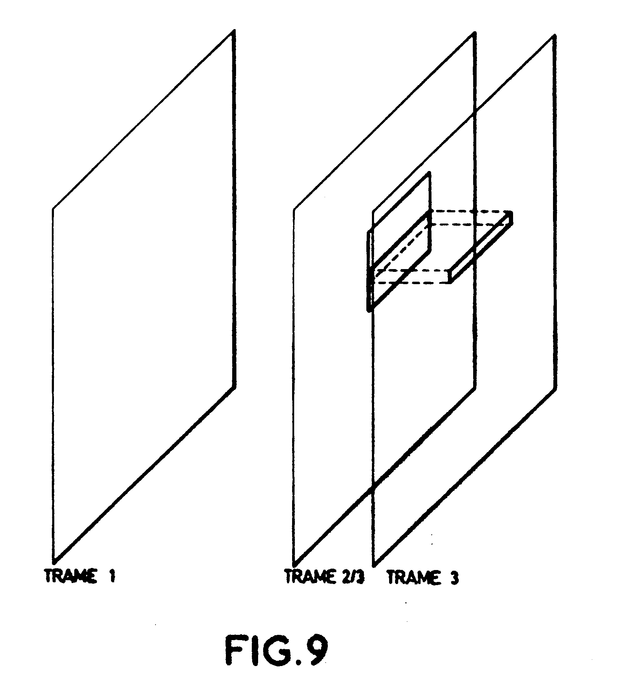

Selon le présent exemple de réalisation, les blocs intermédiaires ont une taille de 32 pixels par 4 lignes: ils ont la largeur d'un bloc principal et la hauteur d'un sous-bloc. On calcule, à partir des trames 2/3 et 4 et du champ de vecteurs des blocs principaux déterminé pour les trames 1 et 2/3, le champ de vecteurs à résolution spatiale moyenne associé à ces blocs intermédiaires. On en déduira dans un second temps le champ de vecteurs des sous-blocs. L'on voit que si le champ de vecteurs déterminé entre les trames 1 et 2/3 est pris comme source de vecteurs candidats, les calculs d'erreur seront néanmoins effectués à partir de l'information des trames 2/3 et 4 (voir Figure 9).

De même que pour les sous-blocs de la trame 2, on considère que les calculs sont effectués pour des blocs intermédiaires appartenant à la trame de sortie, à savoir la trame 3. Comme précédemment, on sera amené à décomposer les vecteurs de mouvement à appliquer aux blocs intermédiaires en deux vecteurs. Ainsi, pour un vecteur (u, v), on déterminera deux vecteurs *Front* et *Rear* comme suit:

$$\text{Front=} \frac{2}{3}(u,v)$$

$$\text{Rear=}(u,v)\text{-Front}$$

L'erreur associée au vecteur de mouvement (u,v) pour un block intermédiaire (i,j) s'écrira:

$$\text{Err}_{\text{Intermediate}}(i,j) = \sum_{\substack{k=0,2,...,30 \\ l=0,2}} \left| P'\left[\begin{pmatrix} M_x \cdot i + k \\ S_y \cdot j + l \end{pmatrix} + \text{Front}(i,j), \frac{1}{2}\right] - P'\left[\begin{pmatrix} M_x \cdot i + k \\ S_y \cdot j + l \end{pmatrix} - \text{Rear}(i,j), 1\right] \right|$$

Pour un bloc intermédiaire donné de la trame 3, on détermine le bloc principal qui lui correspond: c'est le bloc principal qui, projeté orthogonalement sur la trame 3, contient ce bloc intermédiaire.

On détermine un certain nombre de vecteurs candidats pour un bloc intermédiaire (i,j) donné:

- le vecteur du bloc principal correspondant,
- le vecteur déduit du vecteur du bloc principal ci-dessus en modifiant sa composante horizontale d'un pas de quantification dans le sens positif,
- le vecteur déduit du bloc principal ci-dessus en modifiant sa composante horizontale d'un pas de quantification dans le sens négatif,
- le vecteur du bloc principal le plus proche (au-dessus ou en-dessous) du bloc intermédiaire,
- le vecteur déduit du bloc principal ci-dessus en modifiant sa composante horizontale d'un pas de quantification dans le sens positif,
- le vecteur déduit du bloc principal ci-dessus en modifiant sa composante horizontale d'un pas de quantification dans le sens négatif.

Selon le présent exemple de réalisation, les six vecteurs candidats seront donc:
Si jmod4 < 2 alors j'=-1 sinon j'=1

$$\text{Rel}^{IB}_{(i,j)}(1) = MB(i,j \vee 4)$$

$$\text{Rel}^{IB}_{(i,j)}(2) = MB(i, j \vee 4) + \begin{pmatrix} 2 \\ 0 \end{pmatrix}$$

$$\text{Rel}^{IB}_{(i,j)}(3) = MB(i, j \vee 4) + \begin{pmatrix} -2 \\ 0 \end{pmatrix}$$

$$\text{Rel}^{IB}_{(i,j)}(4) = MB(i,j \vee 4 + j')$$

$$\text{Rel}^{IB}_{(i,j)}(5) = MB(i, j \vee 4 + j') + \begin{pmatrix} 2 \\ 0 \end{pmatrix}$$

$$\text{Rel}^{IB}_{(i,j)}(6) = MB(i, j \vee 4 + j') + \begin{pmatrix} -2 \\ 0 \end{pmatrix}$$

où le quotient de la division euclidienne de a par b
est noté a$\vee$b et son reste amodb.

Les second et troisième vecteurs ont même composante verticale que le premier vecteur, les composantes horizontales étant modifiées. De même, les cinquième et sixième vecteurs ont la même composante verticale que le quatrième vecteur, les composantes horizontales étant modifiées. Ce choix est dû à la taille des blocs intermédiaires, qui n'ont que deux lignes de hauteur. Si on avait choisi des blocs intermédiaires de taille verticale plus importante, il aurait été envisageable d'effectuer une correction de la composante verticale. Mais ici, avec seulement deux lignes par bloc intermédiaire, il est difficile de déterminer de manière fiable une composante verticale et donc à fortiori de la corriger.

On calcule alors l'erreur associée à chacun des six vecteurs, et ce pour chaque bloc intermédiaire. Le vecteur retenu pour un bloc intermédiaire parmi les six vecteurs candidats est celui donnant l'erreur minimale.

Selon une variante de réalisation, on supprime la correction sur les composantes horizontales. Ceci permet d'éviter d'engendrer de trop fortes discontinuités dans le champ de vecteurs en cas d'images bruitées.

On obtient finalement un champ de vecteurs à résolution spatiale moyenne note IB(i,j).

La dernière étape de l'estimation de mouvement de la trame 3 consiste à déterminer un champ de vecteurs de niveau sous-bloc à partir du champ de vecteurs aux blocs intermédiaires. On attribuera naturellement un sous-bloc au bloc intermédiaire dont il fait partie. Selon le présent exemple, deux vecteurs candidats sont déterminés pour chaque sous-bloc: le premier vecteur candidat est celui du bloc intermédiaire dont fait partie le sous-bloc, tandis que le second vecteur est celui du bloc intermédiaire adjacent tel que défini ci-dessous.

Pour un sous-bloc de coordonnées (i,j), les deux vecteurs candidats seront:
Si imod8 < 4 alors i' =-1 sinon i' = 1

$$\text{Rel}_{(i,j)}(1) = IB(i \vee 8, j \vee 4)$$

$$\text{Rel}_{(i,j)}(2) = IB(i \vee 8 + i', j \vee 4)$$

On calculera donc les vecteurs:
Pour m = 1,2

$$\text{Front}_{(i,j)}(m) = \text{int}\left(\frac{2}{3} \cdot \text{Rel}_{(i,j)}(m)\right)$$

$$\text{Rear}_{(i,j)}(m) = \text{Rel}_{(i,j)}(m) - \text{Front}_{(i,j)}(m)$$

Puis les erreurs:
Pour m = 1,2

$$\text{Err}_{(i,j)}(m) = \sum_{\substack{k=0,2 \\ l=0,2}} \left| P'\left[\begin{pmatrix} S_x \cdot i+k \\ S_y \cdot j+l \end{pmatrix} + \text{Front}_{(i,j)}(m), 1\right] - P'\left[\begin{pmatrix} S_x \cdot i+k \\ S_y \cdot j+l \end{pmatrix} - \text{Rear}_{(i,j)}(m), \frac{1}{2}\right]\right|$$

Le vecteur donnant la plus petite erreur sera retenu.

On procède également à un filtrage médian du champ de vecteurs $(SB_3(i,j))$ obtenu, et on calculera le champ d'erreurs $(Err_3(i,j))$ correspondant.

Réduction de bruit

La réduction du bruit comprend deux étapes:

- une réduction de bruit spatiale,
- une réduction de bruit temporelle compensée en mouvement.

La première étape fait appel à l'information contenue dans une seule trame, tandis que la seconde étape fait appel à l'information contenue dans plusieurs, en l'occurrence deux, trames successives.

Dans ce qui suit, seul le filtrage de la luminance sera décrit.

Dans le cadre du présent exemple, le filtrage spatial de la chrominance n'est pas considéré comme nécessaire, les échantillons de chrominance étant trop éloignés les uns des autres pour que le filtre, médian de type directionnel ait un sens. Il est bien évident que la chrominance pourra également être filtrée, notamment si l'information de chrominance est plus dense, notamment si elle avait une résolution identique à celle de la luminance.

Le filtrage temporel de la chrominance se déduit directement de celui de la luminance en considérant des trames d'entrée dont la taille est divisée par le facteur de sous-échantillonnage de la chrominance, (soit par 2 dans la direction des abscisses x pour un format d'entrée 4:2:2). Il faut également diviser la composante x des vecteurs de mouvement par ce même facteur.

Réduction de bruit spatiale

La réduction spatiale de bruit est destinée à réduire le bruit impulsionnel dans les trames d'entrée.

Selon le présent exemple de réalisation, le filtre spatial est un filtre médian directionnel, qui possède l'avantage de ne pas dégrader les fronts et les textures fines d'une image. Un simple filtrage linéaire ou médian n'aurait pas cet avantage.

Le filtrage médian directionnel est réalisé ici sur trois pixels: le pixel "courant", ainsi que deux pixels adjacents situés sur une même droite passant par le pixel courant. Compte tenu de ces restrictions, quatre directions de filtrage sont possibles: horizontale, verticale et deux diagonales.

Le choix de la direction à considérer est fait en fonction de la corrélation existant entre les trois pixels d'une même direction.

Le tableau suivant représente le pixel courant (X22) entouré de ses pixels adjacents:

| x11 | x12 | x13 |
|-----|-----|-----|
| x21 | x22 | x23 |

(suite)

| x31 | x32 | x33 |
|-----|-----|-----|

La direction horizontale (appelée d1) passe par les pixels X21, X22 et X23.

La direction verticale (appelée d2) passe par les pixels X12, X22 et X32.

La première direction diagonale (d3) passe par les pixels X31, X22 et X13.

La seconde direction diagonale (d4) passe par les pixels X11, X22 et X33.

Les coefficients de correlation associés à chacune des directions sont respectivement notées c1 à c4 et les valeurs filtrées m1 à m4.

Selon d1:

$$c1 = \min(|x21 - x22|, |x23 - x22|)$$

$$m1 = \operatorname{med}(x21, x22, x23)$$

Selon d2:

$$c2 = \min(|x12 - x22|, |x32 - x22|)$$

$$m2 = \operatorname{med}(x12, x22, x32)$$

Selon d3:

$$c3 = \min(|x13 - x22|, |x31 - x22|)$$

$$m3 = \operatorname{med}(x13, x22, x31)$$

Selon d4:

$$c4 = \min(|x11 - x22|, |x33 - x22|)$$

$$m4 = \operatorname{med}(x11, x22, x33)$$

La direction pour laquelle le coefficient de corrélation est le plus faible sera retenue.

D'autres fonctions de corrélation peuvent également être choisies. De même, le filtrage peut être réalisé sur plus de trois pixels ou dans plus de trois directions, si la fenêtre utilisée le permet.

Réduction de bruit temporelle compensée en mouvement

Un intérêt non négligeable de l'estimation de mouvement est qu'elle permet l'application de procédés de réduction de bruit compensés en mouvement.

On part de l'hypothèse que le bruit perturbant une image de télévision est sensiblement d'espérance mathématique nulle, c'est à dire que sa moyenne temporelle sur plusieurs images tend vers zéro. On peut donc réduire les composantes à haute fréquence de ce bruit en réalisant un filtrage passe-bas temporel de l'image.

Un procédé de filtrage connu consiste à réaliser un filtrage numérique récurrent pixel à pixel. Ce procédé comprend la mémorisation, pour chaque pixel, d'un certain nombre d'échantillons, et l'application d'une relation de récurrence entre ces valeurs mémorisées et un pixel courant. On peut ainsi déterminer une valeur filtrée pour ce pixel courant, ainsi que mettre à jour les valeurs mémorisées. Le choix de la relation de récurrence et le nombre de termes mémorisés déterminent l'efficacité du filtre.

Cependant, l'application d'un filtre passe-bas temporel à une séquence d'images de télévision possède un défaut majeur: elle engendre par la nature même de ce filtrage une trainée suivant tous les objets mobiles, ce phénomène étant similaire à ce qu'on l'on pourrait voir sur un tube cathodique à forte rémanence. Cet effet est très visible sur certains téléviseurs commercialisés.

Selon le présent exemple de réalisation, cet effet est atténué en utilisant les vecteurs de mouvement déjà calculés lors de la mise en oeuvre de la relation de récurrence. La récurrence sera réalisée non pas sur des pixels de coordonnées fixes, mais sur des pixels translatés par les vecteurs de mouvement. En d'autres termes, on suit le déplacement des objets pour faire correspondre des pixels images d'un même point de l'objet mobile.

Dans le cadre du présent exemple, la réduction de bruit temporelle est réalisée grâce à une unique mémoire de trame sur les trames d'entrée (filtrées spatialement). On mettra en oeuvre le champ de vecteurs à précision maximale, à savoir le champ de vecteurs des sous-blocs. On commencera donc par calculer les vecteurs à partir de la trame mémorisée et de la trame d'entrée non réduite en bruit. Le champ de vecteurs ainsi obtenu sera utilisé pour réduire en bruit la trame d'entrée. L'interpolation sera réalisée entre la trame d'entrée ainsi traitée et entre la trame mémorisée: les deux trames servant à l'interpolation auront donc subi une réduction du bruit.

Dans le cadre du présent exemple, une seule mémoire de trame est utilisée: on ne retient pour chaque pixel qu'un seul échantillon dans le passé. La récurrence portera donc sur deux termes: le pixel "courant" et un échantillon mémorisé.

La réduction de bruit s'articule en deux parties:

- Mise en correspondance des pixels sur lesquels va porter la relation de récurrence.
- Application de la relation de récurrence.

La mise en correspondance des pixels est réalisée sous-bloc par sous-bloc de la trame d'entrée. On met en correspondance les pixels d'un sous-bloc de la trame d'entrée et les pixels du sous-bloc désigné par le vecteur de mouvement correspondant dans la trame mémorisée. On réalise donc une projection de la trame mémorisée suivant le champ de vecteurs de mouvement.

Si l'on désigne la luminance de la trame d'entrée par

$$P\left[\begin{pmatrix} x \\ y \end{pmatrix}, t\right],$$

celle de la trame réduite en bruit contenue dans la mémoire par

$$\tilde{P}\left[\begin{pmatrix} x \\ y \end{pmatrix}, t\right]$$

et celle de la trame projetée par

$$\hat{P}\left[\begin{pmatrix} x \\ y \end{pmatrix}, t\right]$$

cette dernière s'écrit, pour la trame 2/3:

$$\forall x \in \{0, 1, ..., 720\}$$

$$\forall y \in \{1, 3, 5, ..., 575\}$$

$$\hat{P}_{2/3}\left[\begin{pmatrix}x\\y\end{pmatrix},\frac{1}{2}\right]=\tilde{P}_{1}\left[\begin{pmatrix}x\\y\end{pmatrix}-SB_{2}^{(i,j)},0\right]$$

avec

i = xmod4
j = ymod4

Et pour la trame 4:

$$\forall x\in\{0,1,...,720\}$$

$$\forall y\in\{0,2,4,...,574\}$$

$$\hat{P}_{4}\left[\begin{pmatrix}x\\y\end{pmatrix},1\right]=\tilde{P}_{2/3}\left[\begin{pmatrix}x\\y\end{pmatrix}-SB_{3}^{(i,j)},\frac{1}{2}\right]$$

avec

i = xmod4
j = ymod4

Il s'agit maintenant de définir et d'appliquer une relation de récurrence. Elle portera comme indiqué plus haut sur

$$\hat{P}\left[\begin{pmatrix}x\\y\end{pmatrix},t\right] \quad et \quad P\left[\begin{pmatrix}x\\y\end{pmatrix},t\right]$$

et donnera

$$\tilde{P}\left[\begin{pmatrix}x\\y\end{pmatrix},t\right].$$

A supposer que l'aspect d'un objet change peu d'une trame à l'autre, et en tout cas lentement par rapport à la constante de temps du filtre, les différences de luminosité ne sont dues qu'au bruit. Dans le cadre du présent exemple, la relation de récurrence utilisée est donc:

$$\tilde{P}\left[\begin{pmatrix}x\\y\end{pmatrix},t\right]=P\left[\begin{pmatrix}x\\y\end{pmatrix},t\right]+f\left(\hat{P}\left[\begin{pmatrix}x\\y\end{pmatrix},t\right]-P\left[\begin{pmatrix}x\\y\end{pmatrix},t\right]\right)$$

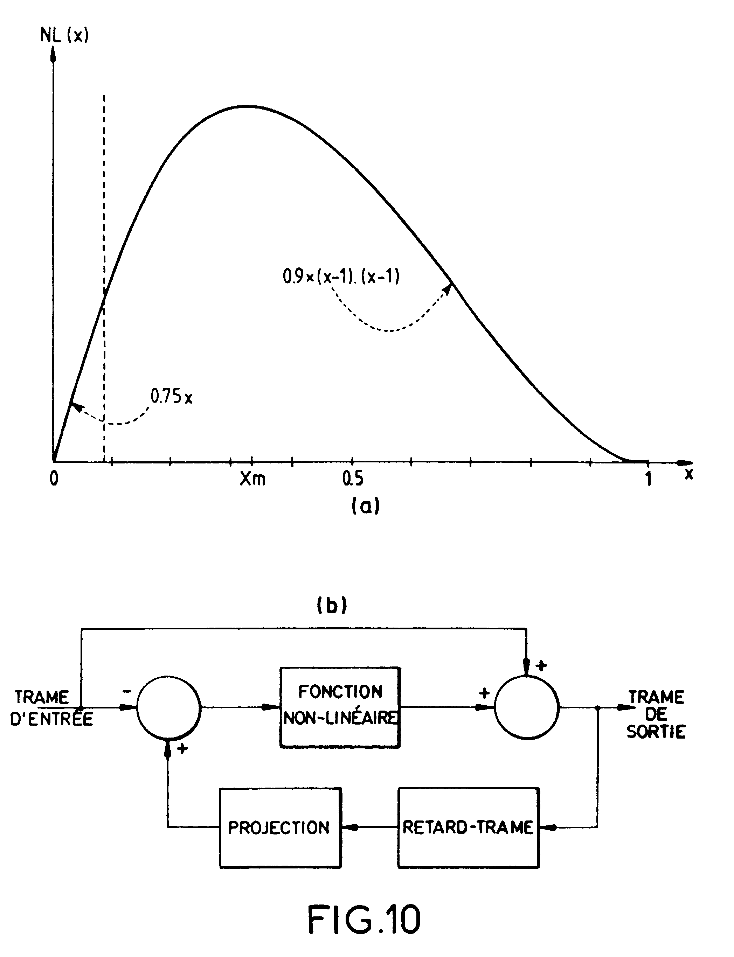

où f est une fonction non-linéaire adaptée au bruit, issue de la fonction non linéaire NL représentée sur la figure 10 (a), avec le schéma du filtre récurrent utilisé (Figure 10 (b)). Cette fonction possède une partie linéaire au début de sa courbe: pour de faibles différences entre l'image reçue et sa projection, la correction est maximale et le pixel de sortie est interpolé linéairement, avec un facteur ¾ pour la projection et ¼ pour le pixel reçu. Si la différence croît, la probabilité d'effacer une transition réelle dans l'image croît aussi, et on choisit de privilégier le pixel reçu, jusqu'à ne plus tenir compte du tout de l'estimation si l'écart est trop important.

Selon le présent exemple de réalisation, on adapte cette fonction à la variance du bruit estimé au moment du calcul des vecteurs de mouvement: on arrive ainsi à faire la différence entre le bruit à réduire et l'information à sauvegarder.

NL s'écrit alors:

$$NL:R^+ \rightarrow R$$

$$x \rightarrow NL(x)$$

$$\forall 0 \le x \le 1 : NL(x) = \min\left(\frac{3}{4}x, \frac{9}{10}x \cdot (x-1)^2\right)$$

$$\forall x > 1 : NL(x) = 0,$$

alors f est la fonction impaire de **R** dans **R** définie sur **R⁺** par:

$$f(x) = \frac{2s}{x_M} NL\left(\frac{x}{2s} \cdot x_M\right)$$

où s est l'écart-type du bruit mesuré par algorithme et
$x_M$ le maximum local de la fonction NL

On posera:
s = Noiseest

Selon une variante de réalisation du présent exemple, la réduction de bruit temporelle n'est pas effectuée lorsque la confiance dans un vecteur de mouvement est trop faible par rapport au bruit de l'image.

Selon une autre variante de réalisation, on réalise un filtrage spatial de la trame mémorisée avant la projection suivant le champ de vecteurs de mouvement. En effet, étant donné le sous-échantillonnage effectué avant l'estimation de mouvement, la précision des vecteurs de mouvement, et par conséquent de la projection est de deux pixels. Les détails plus fins sont éliminés par l'intermédiaire d'un filtre passe-bas linéaire. Des mesures ont montré qu'un filtrage passe-bas abaisse le niveau de bruit d'environ 2 dB supplémentaires.

Interpolation

Après avoir obtenu pour chaque trame à interpoler un champ de vecteurs le plus exact possible, il s'agit désormais de déduire de cette information et des trames d'entrée les trames que l'on va afficher. Selon la trame prise en considération, on ne visera pas les mêmes objectifs.

On se tiendra notamment aux lignes de conduite suivantes:

- on tentera de garder une homogénéité dans les différentes procédures d'interpolation adaptées à chaque trame: une différence trop brutale entre deux types d'interpolation conduit à des différences d'aspect d'une trame sur l'autre qui, répétées 75 fois par seconde, engendrent un scintillement plus gênant que celui que l'on cherche à réduire;
- on prendra les mesures nécessaires pour qu'une erreur sur un vecteur de mouvement, même importante en valeur mais suffisamment localisée, ou une différence entre le champ de vecteurs réel et celui mesuré due par exemple à la quantification, ne crée pas de perturbation trop visible. De plus, la présence de bruit dans l'image ne doit pas mettre en échec le procédé d'interpolation.

Interpolation de la trame 1 (luminance)

La trame 1 est un cas particulier, en ce sens que ses lignes paires sont reprises telles quelles. Il faut cependant reconstituer les lignes impaires.

On notera $P_1(x,y)$ avec ($0{\leq}x{\leq}719; 0{\leq}y{\leq}575$) la luminance d'un pixel de la trame 1.

Selon le présent exemple de réalisation plusieurs types d'interpolation sont mis en oeuvre pour reconstituer les lignes manquantes:

- interpolation linéaire verticale par moyennage (filtrage spatial pur)
- entrelacement des trames 1 et 2/3 dans les zones immobiles (filtrage temporel pur).
- interpolation mettant en oeuvre les vecteurs de mouvement (filtrage spatio-temporel)

Le choix du type d'interpolation est fait bloc principal par bloc principal en fonction de critères liés au vecteur et à l'erreur associée au bloc.

Le vecteur associé à un bloc principal de la trame 1 est celui associé au bloc principal de même position dans la trame 2/3. Bien que l'estimation de mouvement ne soit pas effectuée pour les blocs de la trame 1, mais pour les blocs de la trame 2/3, on prend néanmoins en considération ces vecteurs. En effet, si l'on s'éloigne des bords des objets en mouvement et si le mouvement est régulier, les vecteurs obtenus par estimation directe sur les blocs de la trame 1 seraient similaires aux vecteurs calculés pour la trame 2/3.

L'interpolation linéaire verticale (filtrage spatial pur) est une solution de repli utilisée lorsque la confiance dans le vecteur de mouvement détecté est trop faible. Pour le présent mode de réalisation, on utilise l'interpolation:

$$P_1\big[(x,y)\big] = \frac{1}{2}\left(P\left[\begin{pmatrix} x \\ y-1 \end{pmatrix}, 0\right] + P\left[\begin{pmatrix} x \\ y+1 \end{pmatrix}, 0\right]\right)$$

Le moyennage vertical a l'inconvénient de faire apparaître des "escaliers" très visibles sur les lignes diagonales. De plus, il donne une définition médiocre, égale tout au plus à celle d'un téléviseur conventionnel. Enfin, il crée nécessairement un scintillement de ligne puisqu'on ne peut interpoler les trames 2 et 3 de cette manière. On cherchera donc à éviter si possible le moyennage vertical.

Ce filtrage spatial pur est mis en oeuvre à l'intérieur du filtre spatio-temporel décrit plus loin.

Si le vecteur de mouvement associé à un bloc principal est nul, on réalise un filtrage dit filtrage temporel pur, en ce sens que les lignes manquantes de la trame 1 sont choisies dans une autre trame. On réalise ainsi un entrelacement des lignes de deux trames. Le critère choisi pour déterminer le caractère statique d'un bloc principal est la comparaison de l'erreur de l'estimation de mouvement par rapport à un seuil. Si l'erreur est inférieure à ce seuil, alors le bloc est jugé statique. En effet, si seulement une partie du bloc est statique, l'autre partie engendrera néanmoins une erreur importante.

Le critère s'écrit:

$$\text{MBError}(i,j) < \text{Seuil} \times \text{Noisest}$$

et le pixel interpolé s'écrira:

pour y pair:

$$P_1(x,y) = P(x,y,0)$$

pour y impair:

$$P_1(x,y) = P\left(x, y, \frac{1}{2}\right)$$

Ce type d'interpolation permet, par rapport à l'interpolation de type verticale par moyenne, de permettre une définition verticale double et de supprimer le scintillement de ligne.

Si le vecteur de mouvement est non nul ou si le vecteur de mouvement est nul, mais que le critère portant sur l'erreur associée précédemment défini n'est pas rempli, alors un filtrage spatio-temporel est utilisé pour l'interpolation. Dans le cadre du présent exemple, il s'agit d'un filtrage de type médian.

Un filtre de type médian permet de conserver une bonne définition et de respecter les fronts de l'image, contrairement aux filtres purement linéaires.

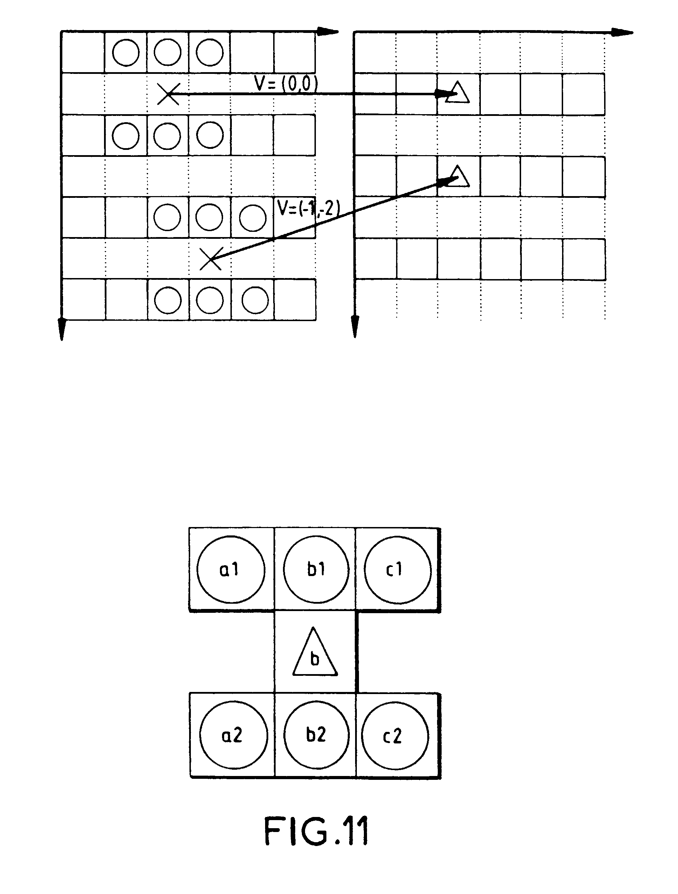

La figure 11 illustre ce type d'interpolation. Sur cette figure, un "X" désigne le pixel à interpoler, un rond désigne un pixel de la trame 1 et un triangle un pixel de la trame 2/3.

La valeur d'un pixel interpolé est déterminée en deux temps:

- dans un premier temps, on détermine trois valeurs correspondant à trois filtres F1, F2 et F3,

    F1 réalise une moyenne des valeurs du pixel (b1) situé au dessus du pixel à interpoler et du pixel (b2) situé en dessous du pixel à interpoler,
    F2 donne la valeur médiane entre b1, b2 et la valeur du pixel (b) de la trame 2/3 correspondant à la translation par le vecteur de mouvement approprié du pixel à interpoler de la trame 1,
    F3 donne la valeur médiane parmi la valeur du pixel b et des valeurs des quatre pixels diagonalement adjacents (a1, c1, a2, c2) au pixel à interpoler,

- dans un second temps, on détermine la valeur médiane parmi les trois valeurs données par ces filtres.

Soit **MB(i,j)** le vecteur du bloc principal dont fait partie le pixel que l'on cherche à interpoler. Soient:

$$v_x = (1\ 0) \cdot MB(i,j)$$

$$v_y = (0\ 1) \cdot MB(i,j)$$

Pour y pair:

$$P_1(x,y) = P\left[\begin{pmatrix} x \\ y \end{pmatrix}, 0\right]$$

Pour y impair:

$$F1(x,y) = \frac{1}{2}\left(P\left[\begin{pmatrix} x \\ y-1 \end{pmatrix}, 0\right] + P\left[\begin{pmatrix} x \\ y+1 \end{pmatrix}, 0\right]\right)$$

$$F2(x,y) = med_3\left(P\left[\begin{pmatrix} x \\ y-1 \end{pmatrix}, 0\right]; P\left[\begin{pmatrix} x \\ y+1 \end{pmatrix}, 0\right]; P\left[\begin{pmatrix} x+v_x \\ y+v_y \end{pmatrix}, \frac{1}{2}\right]\right)$$

$$F3(x,y) = med_5\left(P\left[\begin{pmatrix} x-1 \\ y-1 \end{pmatrix}, 0\right]; P\left[\begin{pmatrix} x-1 \\ y+1 \end{pmatrix}, 0\right]; P\left[\begin{pmatrix} x+1 \\ y-1 \end{pmatrix}, 0\right]; P\left[\begin{pmatrix} x+1 \\ y+1 \end{pmatrix}, 0\right]; P\left[\begin{pmatrix} x+v_x \\ y+v_y \end{pmatrix}, \frac{1}{2}\right]\right)$$

Finalement:

$$P_1(x,y) = med_3(F1(x,y); F2(x,y); F3(x,y))$$

On construit ainsi un filtre portant sur sept valeurs de pixels, dont un seul n'appartient pas à la trame courante. Les effets dus à une mauvaise estimation de mouvement sont ainsi atténués.

D'autre part, la définition sera bien conservée et les contours des objets bien suivis de par le filtrage médian directionnel qui agit à la fois dans les directions verticale et diagonales.

Interpolation de la trame 2 (luminance)

L'interpolation de la trame 2 s'effectue à partir du champ de vecteurs au niveau des sous-blocs. Tous les pixels de la trame doivent être interpolés, puisqu'elle ne se confond pas temporellement avec une trame d'entrée, comme cela est le cas pour la trame 1.

Par souci d'homogénéité, les mécanismes d'interpolation utilisés pour la trame 2 possèdent des caractéristiques semblables à ceux déjà employés pour la trame 1.

On procède donc sous-bloc par sous-bloc.

De la même manière que pour la trame 1, si l'erreur liée au vecteur de mouvement d'un sous-bloc est importante, l'interpolation est réalisée avec le filtre spatio-temporel déjà utilisé pour la trame 1. Cependant, la trame 2 étant située temporellement entre la trame 1 et la trame 2/3, le vecteur de mouvement entre les trames 1 et 2/3 est séparé en deux vecteurs, l'un (Front vector) indiquant le mouvement entre la trame 1 et la trame 2, l'autre indiquant le mouvement entre la trame 2 et la trame 2/3. Chacun de ces deux vecteurs est arrondi à une valeur entière. On rappelle qu'une décomposition identique en deux vecteurs d'un vecteur de mouvement a été utilisée lors du calcul des vecteurs de mouvement associés aux sous-blocs de la trame 2. Les arrondis seront effectués de la même manière dans les deux cas, pour éviter d'ajouter des erreurs.

Si (i,j) représente les coordonnées du sous-bloc contenant le pixel à interpoler, on calculera les vecteurs:

$$\text{Rear}(i,j) = \text{int}[\tfrac{2}{3} \cdot SB_2(i,j)]$$

$$\text{Front}(i,j) = SB_2(i,j) - \text{Rear}(i,j)$$

On détermine ensuite trois valeurs préliminaires (a, b, c). Le calcul diffère selon que le pixel à interpoler est situé dans une ligne paire ou impaire.

Pour y pair, soient

$$a = P\left[\begin{pmatrix} x \\ y-1 \end{pmatrix} + \text{Front}(i,j), \frac{1}{2}\right]$$

$$b = P\left[\begin{pmatrix} x \\ y \end{pmatrix} - \text{Rear}(i,j), 0\right]$$

$$c = P\left[\begin{pmatrix} x \\ y+1 \end{pmatrix} + \text{Front}(i,j), \frac{1}{2}\right]$$

alors:

$$P_2(x,y) = \text{med}_3\left(\frac{(2*a+b)}{3}; \text{med}_3(a,b,c); \frac{(2*c+b)}{3}\right)$$

Pour y impair, on pose de même:

$$a = P\left[\begin{pmatrix} x \\ y-1 \end{pmatrix} - Rear(i,j), 0\right]$$

$$b = P\left[\begin{pmatrix} x \\ y \end{pmatrix} + Front(i,j), \frac{1}{2}\right]$$

$$c = P\left[\begin{pmatrix} x \\ y+1 \end{pmatrix} - Rear(i,j), 0\right]$$

alors:

$$P_2(x,y) = med_3\left(\frac{(a+2*b)}{3}; med_3(a,b,c); \frac{(c+2*b)}{3}\right)$$

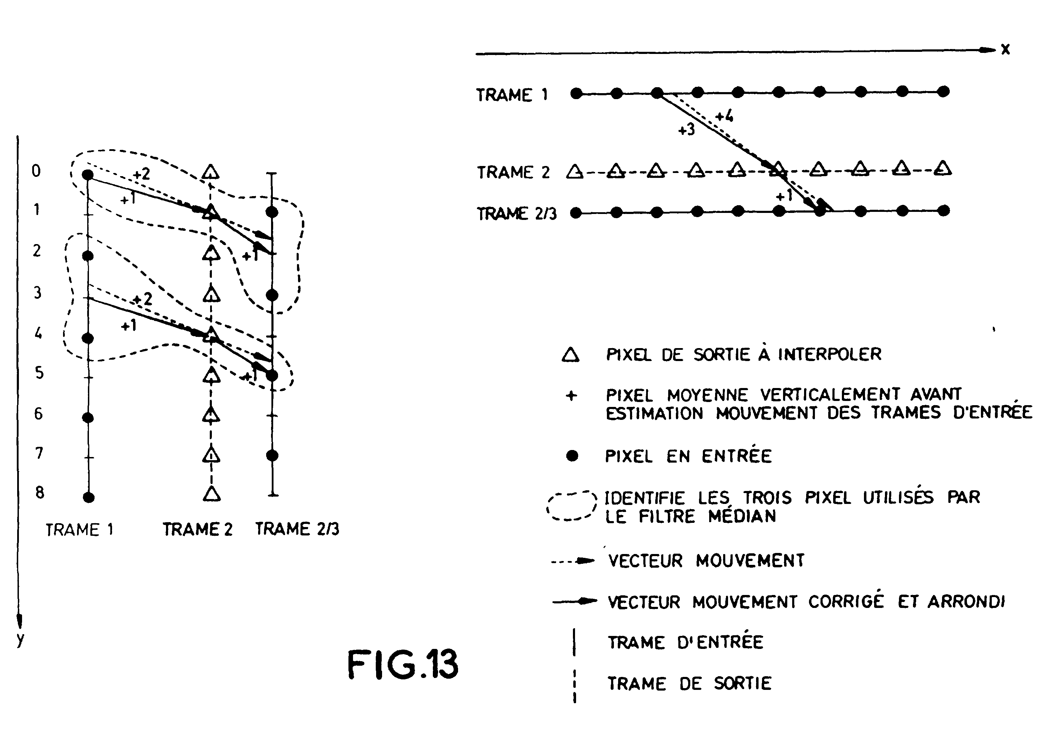

Ce filtrage est illustré par la figure 13.

$P_2(x,y)$ est la valeur du pixel interpolé et correspond à la valeur médiane parmi trois valeurs: les résultats de deux filtres linéaires et d'un filtre médian à partir des valeurs des pixels a, b et c.

Les deux filtres linéaires réalisent une interpolation temporelle avec des coefficients de pondération correspondant aux positions relatives du pixel à interpoler par rapport aux pixels a, b, c. Il faut noter que ce sont deux filtres temporels purs, c'est à dire n'utilisant qu'un seul pixel dans chacune des trames d'entrée. Ceci permet d'éviter une perte de résolution verticale.

Le filtre médian permet également de conserver à la trame générée une bonne résolution spatiale. Mais il permet aussi de garder une certaine homogénéité entre les différents mécanismes d'interpolation des trois trames.

Si le vecteur de mouvement lié à un sous-bloc est nul et si la confiance accordée à un vecteur est bonne (erreur faible), l'interpolation sera, comme dans le cas de la trame 1, de type interpolation temporelle pure: on entrelace les lignes des trames 1 et 2/3:

Pour y pair:

$$P'_2(x,y) = P(x,y,0)$$

Pour y impair:

$$P'_2(x,y) = P\left(x,y,\frac{1}{2}\right)$$

On calcule d'autre part, selon une variante de réalisation, une seconde valeur possible pour ce pixel, appelée valeur de repli. Cette valeur, notée $Fallback_2(x,y)$, correspond à un filtrage linéaire coupant très sévèrement les hautes fréquences spatiales sur les deux trames concernées:

$$\text{Fallback}_2(x,y) = \frac{1}{16}(1 \quad 2 \quad 3 \quad 4 \quad 3 \quad 2 \quad 1)\frac{1}{3}\begin{bmatrix} P(x-3,y,0) \\ P(x-2,y,0) \\ P(x-1,y,0) \\ P(x,y,0) \\ P(x+1,y,0) \\ P(x+2,y,0) \\ P(x+3,y,0) \end{bmatrix} + \frac{2}{3}\begin{bmatrix} P(x-3,y,\frac{1}{2}) \\ P(x-2,y,\frac{1}{2}) \\ P(x-1,y,\frac{1}{2}) \\ P(x,y,\frac{1}{2}) \\ P(x+1,y,\frac{1}{2}) \\ P(x+2,y,\frac{1}{2}) \\ P(x+3,y,\frac{1}{2}) \end{bmatrix}$$

Les valeurs de pixel non définies dans les trames seront interpolées en utilisant simplement un filtre spatial vertical sur les pixels supérieurs et inférieurs.

On définit également la confiance portée à un vecteur de mouvement comme:

$$\text{Conf}(x,y) = \frac{\text{Error}_2(x,y)}{\text{NBPixel}}$$

où NBPixel représente le nombre de pixels contenus dans un sous-bloc sous-échantillonné. Conf(x,y) représente l'erreur ramenée à un pixel.

La valeur $P_2(x,y)$ du pixel interpolé sera alors:

$$P_2(x,y) = \text{med}_3\left(P'_2(x,y) - \frac{\text{Conf}(x,y)}{\text{Scale}}, \text{Fallback}(x,y), P'_2(x,y) + \frac{\text{Conf}(x,y)}{\text{Scale}}\right)$$

La valeur $P_2(x,y)$ est égale à la valeur du pixel compensé en mouvement mais encadrée de manière à ne pas pouvoir s'écarter de la valeur du pixel de repli d'une valeur supérieure à la confiance divisée par un facteur correctif.

Interpolation de la trame 3 (luminance)

Les mécanismes sont très semblables à ceux employés pour la trame 2. La trame 3 est interpolée à partir des trames 2/3 et 4 (c'est à dire la trame 1 du cycle suivant) et des vecteurs des sous-blocs $\mathbf{SB}_3(i,j)$. Seuls les coefficients d'interpolation et les aspects de parité des lignes vont changer.

On calculera donc les vecteurs:

$$Front(i,j) = \text{int}\left[\frac{2}{3} \cdot SB_3(i,j)\right]$$

$$Rear(i,j) = SB_3(i,j) - Front(i,j)$$

et les points seront calculés:

Pour y impair, soient

$$a = P\left[\begin{pmatrix} x \\ y-1 \end{pmatrix} + Front(i,j), 1\right]$$

$$b = P\left[\binom{x}{y} - \mathrm{Re}\,ar(i,j),\frac{1}{2}\right]$$

$$c = P\left[\binom{x}{y+1} + Front(i,j),1\right]$$

alors:

$$P_3(x,y) = med\,3\left(\frac{(a+2*b)}{3}; med\,3(a,b,c); \frac{(c+2*b)}{3}\right)$$

Pour y pair, on pose de même:

$$a = P\left[\binom{x}{y-1} - \mathrm{Re}\,ar(i,j),\frac{1}{2}\right]$$

$$b = P\left[\binom{x}{y} + Front(i,j),1\right]$$

$$c = P\left[\binom{x}{y+1} - \mathrm{Re}\,ar(i,j),\frac{1}{2}\right]$$

alors

$$P3(x,y) = med\,3\left(\frac{(2*a+b)}{3}; med\,3(a,b,c); \frac{(2*c+b)}{3}\right)$$

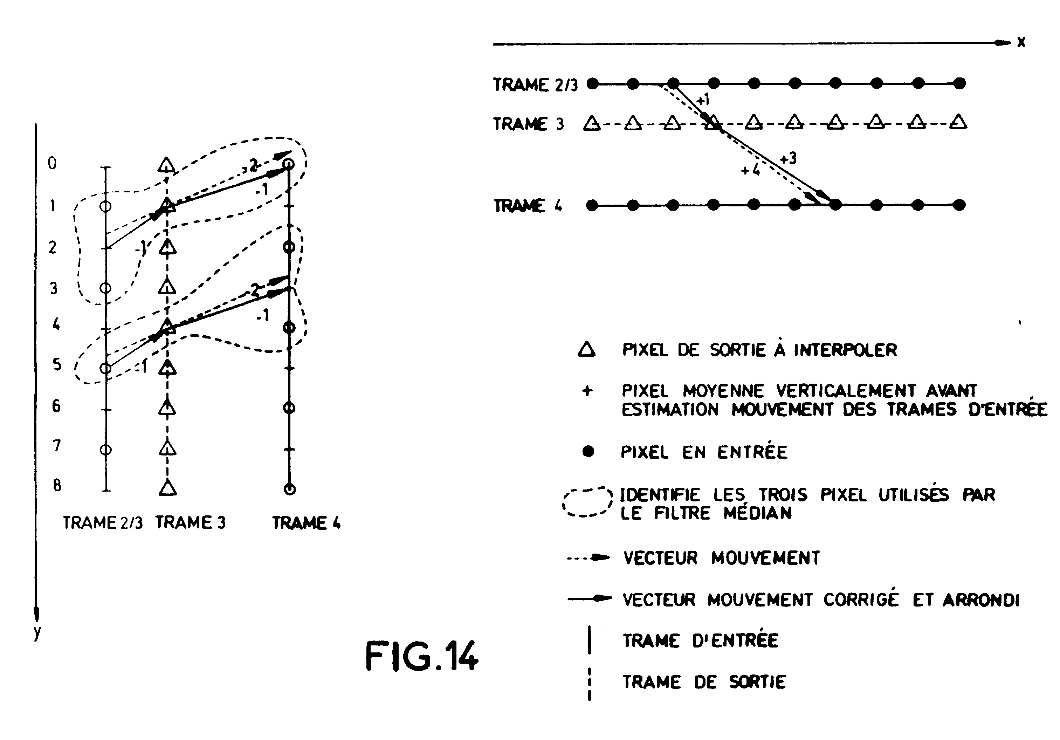

La figure 14 illustre ce filtrage.
Si la confiance est très bonne et le vecteur nul, on optera encore pour une interpolation temporelle pure:
*y pair*:

$$P_3(x,y) = P(x,y,1)$$

*y impair*:

$$P_3(x,y) = P\left(x,y,\frac{1}{2}\right)$$

On calculera ensuite le pixel de repli,

$$Fallback3(x,y) = \frac{1}{16}(1 \quad 2 \quad 3 \quad 4 \quad 3 \quad 2 \quad 1)\left[\frac{2}{3}\begin{pmatrix} P(x-3,y,\frac{1}{2}) \\ P(x-2,y,\frac{1}{2}) \\ P(x-1,y,\frac{1}{2}) \\ P(x,y,\frac{1}{2}) \\ P(x+1,y,\frac{1}{2}) \\ P(x+2,y,\frac{1}{2}) \\ P(x+3,y,\frac{1}{2}) \end{pmatrix} + \frac{1}{3}\begin{pmatrix} P(x-3,y,1) \\ P(x-2,y,1) \\ P(x-1,y,1) \\ P(x,y,1) \\ P(x+1,y,1) \\ P(x+2,y,1) \\ P(x+3,y,1) \end{pmatrix}\right]$$

et la confiance que l'on porte au vecteur de mouvement,

$$Conf(i,j) = \frac{Error_3(i,j)}{NBpixel}$$

Enfin, on établira la valeur du pixel affiché en interdisant à ce pixel de trop s'écarter de la valeur du pixel de repli si la confiance est mauvaise:

$$P_{3/out}(i,j) = med\left(P'_3(i,j) - \frac{Conf(i,j)}{Scale}, Fallback_3(i,j), P'_3(i,j) + \frac{Conf(i,j)}{Scale}\right)$$

On voit qu'ici, la continuité de l'interpolation est bien assurée avec la trame précédente puisque l'algorithme est calqué sur l'interpolation de la trame 2. Cependant, les vecteurs de sous-blocs ont un biais temporel -dû au fait qu'ils ont été calculés à partir des blocs principaux déterminés pour la trame de sortie précédente- qui rend la définition de cette trame plus mauvaise que celle de la trame précédente, notamment dans le cas de mouvements rapidement évolutifs.

Traitement de la chrominance

L'interpolation de la chrominance est sujette à des contraintes beaucoup moins sévères que celle de la luminance; en effet, la définition de l'oeil est beaucoup plus faible. D'ailleurs, la norme utilisée pour la transmission sur le réseau hertzien, dite format 4:1:1, inclut un sous-échantillonnage aboutissant à transmettre une information de chrominance pour quatre informations de luminance, avec une répétition de l'information de chrominance identique à elle-même sur deux lignes. Les tolérances sur les filtres utilisés sont donc beaucoup plus grandes. De ce fait, nous nous contenterons de filtres simplifiés.

Les algorithmes d'interpolation de la chrominance sont donc directement extrapolés de ceux d'interpolation de la luminance, en considérant des trames contenant deux fois moins de pixels horizontalement, et en divisant donc par deux la composante horizontale des vecteurs de mouvement.

Pour la trame 1, le filtre à 7 pixels d'entrées utilisé en luminance est limité à 3 pixels d'entrée: Soient:

$$v_x = \frac{1}{2}(1 \ 0)\cdot MB(i,j)$$

$$v_y = (0\ 1)\cdot\text{MB}\,(i,j)$$

Pour *y* pair:

$$\mathbf{P_1}(x,y) = \mathbf{P}\left[\begin{pmatrix} x \\ y \end{pmatrix}, 0\right]$$

Pour *y* impair:

$$F1(x,y) = \frac{1}{2}\left( P\left[\begin{pmatrix} x \\ y-1 \end{pmatrix}, 0\right] + P\left[\begin{pmatrix} x \\ y+1 \end{pmatrix}, 0\right]\right)$$

$$F2(x,y) = \boldsymbol{med}\,3\left( P\left[\begin{pmatrix} x \\ y-1 \end{pmatrix}, 0\right]; P\left[\begin{pmatrix} x \\ y+1 \end{pmatrix}, 0\right]; P\left[\begin{pmatrix} x+v_x \\ y+v_y \end{pmatrix}, \frac{1}{2}\right]\right)$$

$$F3(x,y) = P\left[\begin{pmatrix} x+v_x \\ y+v_y \end{pmatrix}, \frac{1}{2}\right]$$

Finalement:

$$P_1(x,y) = med3(F1(x,y);F2(x,y);F3(x,y))$$

Pour les trames 2 et 3, les filtres médians temporels de la luminance sont conservés, mais on supprime le filtre de repli. Dans le filtre de réduction de bruit temporelle, le filtre horizontal est supprimé, car il filtrerait trop bas les fréquences spatiales.

Mode film

Le cas du mode film est celui des séquences vidéo qui sont générées, non pas au format 625/50/2, mais en 625/25/1. Ces séquences sont donc dans un format progressif à l'entrée, ce qui veut dire que chaque image d'entrée contient 2 trames correspondant au même instant.

De là vient tout le problème: en effet si on applique à de telles séquences l'algorithme décrit ci-dessus, sans aucune modification, l'estimation de mouvement sera complètement inhibée, puisque le calcul des blocs principaux se fera entre les deux trames de la même image, et que toutes les estimations successives qui découlent de ceux-ci ne génèreront que des vecteurs nuls. Si donc aucun mouvement n'est détecté, aucune interpolation temporelle ou compensation en mouvement ne pourra être faite. Ceci est très gênant, car à l'affichage de telles séquences, on ne pourra que répéter 3 fois à l'écran chaque image d'entrée. D'où un effet de saccade particulièrement désagréable dans toute séquence comportant du mouvement.

Une solution simple et peu coûteuse permettant de réduire considérablement cet effet de saccade est la suivante: on va modifier la phase du traitement des informations de façon à ce que le mouvement entre 2 images différentes soit détecté et estimé, et que donc une interpolation temporelle soit possible.

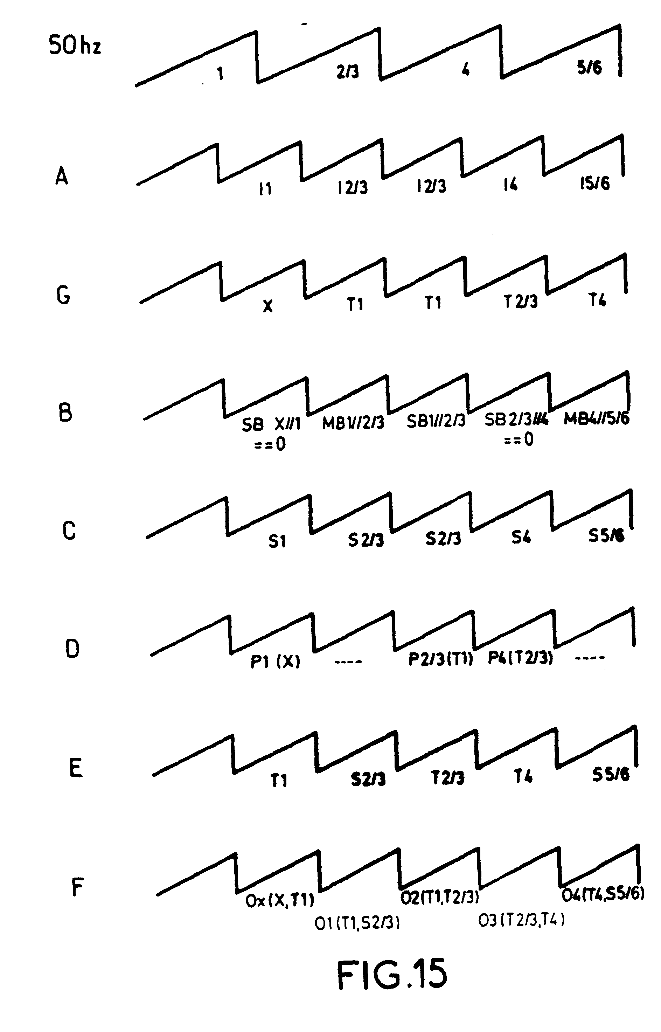

Par conséquent, l'estimation de mouvement principale (la phase des blocs principaux) devra se faire entre une trame 1 paire et une trame 2/3 impaire et non plus entre une trame 1 impaire et une trame 2/3 paire. Les chronogrammes donnés figure 15 illustrent ce mode de fonctionnement particulier.

Tout le traitement sera ainsi décalé d'une trame 50hz. Ce qui veut dire qu'en sortie les lignes à interpoler auront la parité opposée à celle qu'elles ont lors du traitement normal. Mais les filtres et l'estimateur de mouvement fonctionneront de façon strictement identique. Ainsi on génèrera successivement:

- une trame 1 progressive en utilisant le champ de vecteurs de blocs principaux, en conservant les lignes d'entrée et en interpolant les autres avec le filtre médian spatio-temporel à 7 points décrit précédemment,

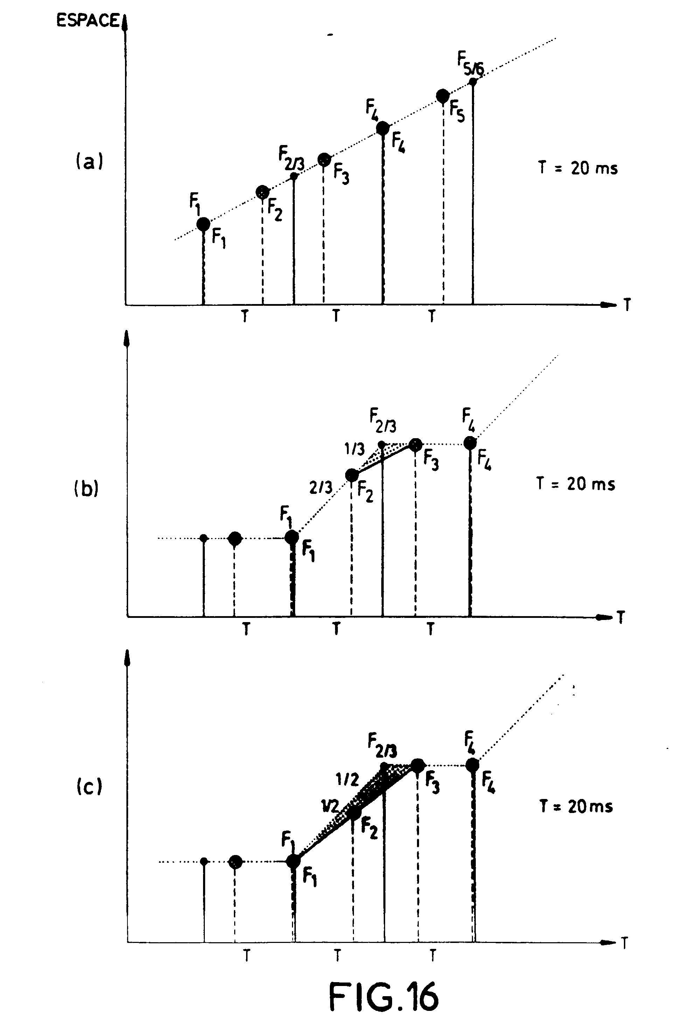

- une trame 2 progressive en utilisant le champ de vecteurs de sous-blocs estimé avec les trames 1 et 2/3 d'entrée. On utilisera ici aussi le filtre médian temporel à 3 points décrit précédemment. Par contre au lieu d'appliquer les coefficients de pondération 2/3 et 1/3 ordinaires, on utilisera les coefficients 1/2 et 1/2; ce qui veut dire que la trame 2 que l'on génère ainsi est située à égale distance entre les trames d'entrées 1 et 2/3. Cette simple modification des coefficients constitue à elle seule une importante réduction de saccade, bien appréciable et sensible sur toutes les images qui ont été traitées. Voir figure 16 le schéma explicatif de cette réduction de saccade.

- et enfin une trame 3 progressive utilisant normalement le champ de vecteur des sous-blocs corrigé par les blocs intermédiaires. En fait, ici, puisque les trames 2/3 et 4 sont issues de la même image, il n'y a pas de mouvement entre ces deux trames. Il suffit donc de forcer les vecteur à zéro ainsi que la confiance: de cette façon le filtre décrit précédemment entrelacera purement et simplement les 2 trames d'entrée pour régénérer une image progressive parfaite.

En conclusion, le mode film pourra être traité sans modification des filtres et mécanismes d'estimation de mouvement: il suffira de contrôler, lorsqu'on aura détecté la présence du mode film, la phase du traitement, les coefficients d'interpolation du filtre des trames 2 ainsi que les vecteurs et confiances des trames 3. La réduction de saccade ainsi obtenue sera donc peu coûteuse à implémenter.

## Revendications

1. Procédé de conversion de trames entrelacées en des trames progressives comprenant un changement de fréquences de trames par interpolation et compensation de mouvement **caractérisé en ce que**

   lorsque le vecteur de mouvement associé à un pixel à interpoler est non nul ou lorsque ce vecteur est nul, mais que la confiance accordée à ce vecteur est inférieure à un seuil donné,
   l'interpolation d'un pixel (x,y) d'une trame temporellement située entre deux trames d'entrée est réalisée par un filtrage médian portant sur les valeurs obtenues par un premier filtre temporel linéaire compensé en mouvement, un second filtre temporel linéaire compensé en mouvement et un filtre temporel médian compensé en mouvement.

2. Procédé selon la revendication 1, **caractérisé en ce que** la confiance accordée à un vecteur est une fonction linéaire de l'erreur engendrée par ce vecteur.

3. Procédé selon l'une des revendications 1 ou 2, **caractérisé en ce que** lesdits filtres linéaires sont fonction de deux pixels (a,b respectivement b,c) situés respectivement dans les trames d'entrée entourant temporellement la trame à interpoler, les coefficients linéaires d'interpolation de chaque pixel correspondant au rapport des intervalles de temps séparant la trame à interpoler et respectivement la trame d'entrée précédente et la trame d'entrée suivante.

4. Procédé selon l'une des revendications 1 à 3, **caractérisé en ce que** lorsque la trame d'entrée précédente est impaire, ledit filtre temporel médian porte sur les trois pixels suivants:

   pour les lignes paires de la trame à interpoler

$$a = P\left[\begin{pmatrix} x \\ y-1 \end{pmatrix} + \mathrm{Front}(i,j), \frac{1}{2}\right]$$

$$b = P\left[\begin{pmatrix} x \\ y \end{pmatrix} - \mathrm{Rear}(i,j), 0\right]$$

$$c = P\left[\begin{pmatrix} x \\ y+1 \end{pmatrix} + \text{Front}(i,j), \frac{1}{2}\right]$$

alors:

$$P_2(x,y) = \text{med}\big(ma + (1-m)b; \text{med}(a,b,c); mc + (1-m)b\big)$$

pour les lignes impaires de la trame à interpoler,

$$a = P\left[\begin{pmatrix} x \\ y-1 \end{pmatrix} - \text{Rear}(i,j), 0\right]$$

$$b = P\left[\begin{pmatrix} x \\ y \end{pmatrix} + \text{Front}(i,j), \frac{1}{2}\right]$$

$$c = P\left[\begin{pmatrix} x \\ y+1 \end{pmatrix} - \text{Rear}(i,j), 0\right]$$

alors:

$$P_2(x,y) = \text{med}\big((1-m)a + mb; \text{med}(a,b,c); (1-m)c + mb\big)$$

où Front(i,j) et Rear(i,j) sont les fractions du vecteur de mouvement associé au pixel à interpoler, ce vecteur étant mis à l'échelle et arrondi, où "0" et "1/2" représentent respectivement la trame d'entrée précédant respectivement suivant la trame à interpoler, et où m représente un coefficient d'interpolation dépendant de la position de la trame à interpoler entre les trames d'entrée.

**5.** Procédé selon l'une des revendications 1 à 3, **caractérisé en ce que** lorsque la trame d'entrée précédente est impaire, ledit filtre temporel médian porte sur les trois pixels suivants:

Pour les lignes impaires de la trame à interpoler:

$$a = P\left[\begin{pmatrix} x \\ y-1 \end{pmatrix} + \text{Front}(i,j), 1\right]$$

$$b = P\left[\begin{pmatrix} x \\ y \end{pmatrix} - \text{Rear}(i,j), \frac{1}{2}\right]$$

$$c = P\left[\begin{pmatrix} x \\ y+1 \end{pmatrix} + \text{Front}(i,j), 1\right]$$

alors:

$$P_3(x,y) = \text{med}\big((1-n)a + b; \text{med}(a,b,c); (1-n)c + b\big)$$

Pour les lignes paires de la trame à interpoler

$$a = P\left[\begin{pmatrix} x \\ y-1 \end{pmatrix} - \text{Rear}(i,j), \frac{1}{2}\right]$$

$$b = P\left[\begin{pmatrix} x \\ y \end{pmatrix} + \text{Front}(i,j), 1\right]$$

$$c = P\left[\begin{pmatrix} x \\ y+1 \end{pmatrix} - \text{Rear}(i,j), \frac{1}{2}\right]$$

alors:

$$P_3(x,y) = \text{med}\big(na + (1-n)b; \text{med}(a,b,c); nc + (1-n)b\big)$$

où Front(i,j) et Rear(i,j) sont les fractions du vecteur de mouvement associé au pixel à interpoler, ce vecteur étant mis à l'échelle et arrondi, où "1/2" et "1" représentent respectivement la trame d'entrée précédant respectivement suivant la trame à interpoler, et où n représente un coefficient d'interpolation dépendant de la position de la trame à interpoler entre les trames d'entrée.

**6.** Procédé selon la revendication 3 et l'une des revendications 4 ou 5, **caractérisé en ce que** les deux pixels utilisés pour chaque filtre linéaire sont choisis dans le groupe de trois pixels utilisé par le filtre temporel médian.

**7.** Procédé selon l'une des revendications précédentes, **caractérisé en ce que**

les trames entrelacées d'entrée sont issues d'images progressives d'entrée de fréquence 25 Hz et que la fréquence des trames de sortie est de 75 Hz, une première trame de sortie (F1) étant temporellement confondue avec la seconde trame issue d'une première image d'entrée, une seconde trame de sortie (F2) étant temporellement située entre ladite première trame d'entrée et la première trame (F2/3) issue d'une seconde image d'entrée, une troisième trame de sortie (F3) étant temporellement située entre les deux trames d'entrée (F2/3, F4) issues de ladite seconde image d'entrée,
les coefficients d'interpolation utilisés par lesdits filtres temporels sont de 1/2 pour ladite seconde trame de sortie.

**8.** Procédé selon la revendication 7, **caractérisé en ce que**
les pixels de ladite troisième trame de sortie sont les pixels de la seconde image d'entrée.

**9.** Procédé selon l'une des revendications 1 à 8, **caractérisé en ce que**

lorsque le vecteur de mouvement associé à un pixel à interpoler est nul et que la confiance dans ce vecteur dépasse un seuil donné, alors la valeur du pixel à interpoler est la valeur finale obtenue par filtrage médian entre premièrement les deux valeurs de pixels obtenues en retirant, respectivement ajoutant la confiance du vecteur de mouvement ramenée au pixel divisée par un facteur correctif (Scale) à la valeur du pixel de même position que le pixel à interpoler dans, selon le cas, la trame d'entrée précédente ou la trame d'entrée suivante, et deuxièmement une valeur de repli qui résulte d'un filtrage linéaire temporel et horizontal sur les pixels des lignes des trames d'entrée précédente et suivante de position identique à la ligne contenant le pixel à interpoler, un filtrage spatial vertical étant effectué le cas échéant sur les lignes non définies des trames d'entrée.

**10.** Procédé selon la revendication 9, **caractérisé en ce que** la valeur de repli est égale à:

$$\text{Fallback}(x,y) = \frac{1}{16}\begin{pmatrix}1 & 2 & 3 & 4 & 3 & 2 & 1\end{pmatrix}\left[ m\begin{pmatrix}P(x-3,y,0)\\P(x-2,y,0)\\P(x-1,y,0)\\P(x,y,0)\\P(x+1,y,0)\\P(x+2,y,0)\\P(x+3,y,0)\end{pmatrix} + (1-m)\begin{pmatrix}P(x-3,y,\frac{1}{2})\\P(x-2,y,\frac{1}{2})\\P(x-1,y,\frac{1}{2})\\P(x,y,\frac{1}{2})\\P(x+1,y,\frac{1}{2})\\P(x+2,y,\frac{1}{2})\\P(x+3,y,\frac{1}{2})\end{pmatrix}\right]$$

où "0" désigne la trame d'entrée précédant la trame à interpoler et "1/2" la trame d'entrée suivant la trame à interpoler, et où m représente un coefficient de pondération dépendant de la position temporelle de la trame à interpoler entre les trames d'entrée.

**11.** Procédé selon l'une des revendications 9 ou 10, **caractérisé en ce que**

l'interpolation d'un pixel (P(x,y)) d'une ligne de parité donnée d'une trame (1) dont les lignes de parité opposée sont égales aux lignes d'une trame d'entrée (1) est réalisée, lorsque le vecteur de mouvement associé n'est pas nul ou que la confiance accordée à ce vecteur est faible, moyennant un filtrage médian (P1(x,y)) portant sur les valeurs obtenues
premièrement par un filtrage linéaire vertical (F1),
deuxièmement par un filtrage médian spatio-temporel vertical sur deux pixels et compensé en mouvement sur un pixel (F2) et
troisièmement par un filtrage médian spatio-temporel portant sur quatre pixels en croix et compensé en mouvement sur un pixel (F3).

**12.** Procédé selon la revendication 11, **caractérisé en ce que** ledit filtrage linéaire vertical (F1) est le suivant:

$$F1(x,y) = \frac{1}{2}\left(P\left[\begin{pmatrix}x\\y-1\end{pmatrix},0\right] + P\left[\begin{pmatrix}x\\y+1\end{pmatrix},0\right]\right)$$

où "0" représente la position temporelle de la trame à interpoler.

**13.** Procédé selon l'une des revendications 11 ou 12, **caractérisé en ce que** ledit filtrage spatio-temporel vertical sur deux pixels et compensé en mouvement sur un pixel (F2) est:

$$F\,2(x,y) = \mathrm{med}\left(P\left[\binom{x}{y-1},0\right];P\left[\binom{x}{y+1},0\right];P\left[\binom{x+v_x}{y+v_y},\frac{1}{2}\right]\right)$$

où Vx et Vy sont les coordonnées d'un vecteur de mouvement associé au pixel à interpoler, et où "0" représente la trame à interpoler et "1/2" la trame d'entrée suivante.

**14.** Procédé selon l'une des revendications 11 à 13, **caractérisé en ce que** ledit filtrage spatio-temporel portant sur quatre pixels en croix et sur un pixel compensé en mouvement (F3) est:

$$F\,3(x,y) = \mathrm{med}\left(P\left[\binom{x-1}{y-1},0\right];P\left[\binom{x-1}{y+1},0\right];P\left[\binom{x+1}{y-1},0\right];P\left[\binom{x+1}{y+1},0\right];P\left[\binom{x+v_x}{y+v_y},\frac{1}{2}\right]\right)$$

**15.** Procédé selon l'une des revendications 11 à 14, **caractérisé en ce que** lorsque le vecteur de mouvement associé à un pixel à interpoler est nul et que la confiance dans ce vecteur est supérieure à un seuil donné, alors ledit pixel prend la valeur du pixel de même position dans la trame d'entrée suivante.

**Patentansprüche**

**1.** Verfahren zur Umsetzung von verschachtelten Halbbildern in progressive Halbbilder mit einer Änderung der Halbbildfrequenz durch Interpolation und Bewegungskompensation, dadurch gekennzeichnet, daß

dann, wenn der zu einem zu interpolierenden Pixel gehörende Bewegungsvektor nicht null ist oder wenn der Vektor null ist, jedoch die diesem Vektor zugeteilte Zuverlässigkeit unterhalb eines bestimmten Schwellwerts, die Interpolation eines Pixels (x, y) eines Halbbildes, das zeitlich zwischen zwei Eingangshalbbildern liegt, durch eine Medianfilterung erfolgt, die auf Werten beruht, die durch eine erste, bewegungskompensierte, zeitliche, lineare Filterung, eine zweite, bewegungskompensierte, zeitliche, lineare Filterung und eine bewegungskompensierte zeitliche Medianfilterung erfolgt.

**2.** Verfahren nach Anspruch 1, dadurch gekennzeichnet, daß die einem Vektor zugeteilte Zuverlässigkeit eine lineare Funktion des durch diesen Vektor erzeugten Fehlers ist.

**3.** Verfahren nach einem der Ansprüche 1 oder 2, dadurch gekennzeichnet, daß die linearen Filter von zwei Pixeln (a, b beziehungsweise b, c), die jeweils in den das zu interpolierende Halbbild zeitlich umgebenden Eingangshalbbildern liegen, den linearen Interpolationskoeffizienten jedes Pixels, das dem Verhältnis der Zeitintervalle entspricht, die das zu interpolierende Halbbild und das entsprechende vorangehende Eingangshalbbild und das folgende Eingangshalbbild trennen, abhängig sind.

**4.** Verfahren nach einem der Ansprüche 1 bis 3, dadurch gekennzeichnet, daß dann, wenn das vorangehende Eingangshalbbild ungeradzahlig ist, die zeitliche Medianfilterung für die drei folgenden Pixel erfolgt:
für die geradzahligen Zeilen des zu interpolierenden Halbbildes:

$$a = P\left[\binom{x}{y-1} + Front(i,j),\frac{1}{2}\right]$$

$$b = P\left[\binom{x}{y} - \mathrm{Re}ar(i,j), 0\right]$$

$$c = P\left[\binom{x}{y+1} + Front(i,j), \frac{1}{2}\right]$$

dann:

$$P_2(x,y) = \mathrm{med}(ma + (1-m)b; \mathrm{med}(a,b,c); mc + (1-m)b)$$

für die ungeradzahligen Zeilen des zu interpolierenden Halbbildes

$$a = P\left[\binom{x}{y-1} - \mathrm{Re}\,ar(i,j), 0\right]$$

$$b = P\left[\binom{x}{y} + Front(i,j), \frac{1}{2}\right]$$

$$c = P\left[\binom{x}{y+1} - \mathrm{Re}\,ar(i,j), 0\right]$$

dann:

$$P_2(x,y) = \mathrm{med}((1-m)a + mb; \mathrm{med}(a,b,c); (1-m)c + mb),$$

dabei sind Front(i,j) und Rear(i,j) die Bruchteile des einem zu interpolierenden Pixel zugeordneten Bewegungsvektors, wobei dieser Vektor skaliert und abgerundet ist und "0" und "1/2" das vorangehende Eingangshalbbild beziehungsweise das zu interpolierende folgende Halbbild darstellen und m einen Interpolationskoeffizienten darstellt, der von der Lage des zu interpolierenden Halbbildes zwischen den Eingangshalbbildern abhängig ist.

5. Verfahren nach einem der Ansprüche 1 bis 3, dadurch gekennzeichnet, daß dann, wenn das vorangehende Eingangshalbbild ungeradzahlig ist, die zeitliche Medianfilterung für die drei folgenden Pixel erfolgt:
für die ungeradzahligen Zeilen des zu interpolierenden Halbbildes

$$a = P\left[\binom{x}{y-1} + Front(i,j), 1\right]$$

$$b = P\left[\binom{x}{y} - \mathrm{Re}ar(i,j), \frac{1}{2}\right]$$

$$c = P\left[\left(\begin{matrix} x \\ y+1 \end{matrix}\right) + Front(i,j), 1\right]$$

dann:

$$P_3(x,y) = med(1-n)a+b; med(a,b,c); (1-n)c+b),$$

für die geradzahligen Zeilen des zu interpolierenden Halbbildes

$$a = P\left[\left(\begin{matrix} x \\ y-1 \end{matrix}\right) - Re\,ar(i,j), \frac{1}{2}\right]$$

$$b = P\left[\left(\begin{matrix} x \\ y \end{matrix}\right) + Front(i,j), 1\right]$$

$$c = P\left[\left(\begin{matrix} x \\ y+1 \end{matrix}\right) - Re\,ar(i,j), \frac{1}{2}\right]$$

dann:

$$P3(x,y) = med(na +(1-n)b; med(a,b,c); nc+(1-n)b)$$

dabei sind Front(i,j) und Rear(i,j) die Bruchteile des einem zu interpolierenden Pixel zugeordneten Bewegungsvektors, dieser Wert skaliert und abgerundet wird, wobei "1/2" und "1" das vorangehende Eingangshalbbild bzw. das zu interpolierende Halbbild darstellen und n einen Interpolationskoeffizienten darstellt, der von der Lage des zu interpolierenden Halbbildes zwischen zwei Eingangshalbbildern abhängig ist.

6. Verfahren nach Anspruch 3 und einem der Ansprüche 4 oder 5, dadurch gekennzeichnet, daß die für jedes lineare Filter benutzen beiden Pixel in der Gruppe von drei Pixeln ausgewählt werden, die durch das zeitliche Medianfilter verwendet werden.

7. Verfahren nach einem der vorangehenden Ansprüche, dadurch gekennzeichnet, daß

die verschachtelten Eingangshalbbilder aus progressiven Eingangsbildern mit der Frequenz von 25 Hz hervorgehen und die Frequenz der Ausgangshalbbilder 75 Hz beträgt, daß ein erstes Ausgangshalbbild (F1) zeitlich mit dem aus einem ersten Eingangshalbbild stammenden zweiten Halbbild übereinstimmt, daß ein zweites Ausgangshalbbild (F2) zeitlich zwischen dem ersten Eingangshalbbild und dem aus einem zweiten Eingangshalbbild hervorgegangenen ersten Halbbild (F2/3) liegt, daß ein drittes Ausgangshalbbild (F3) zeitlich zwischen den beiden aus dem zweiten Eingangshalbbild stammenden beiden Eingangshalbbildern (F2/3, F4) liegt und
daß die für die zeitlichen Filter angewendeten Interpolationskoeffizienten für das zweite Ausgangshalbbild 1/2 betragen.

8. Verfahren nach Anspruch 7, dadurch gekennzeichnet, daß
die Pixel des dritten Ausgangshalbbildes die Pixel des zweiten Eingangsbildes sind.

9. Verfahren nach einem der Ansprüche 1 bis 8, dadurch gekennzeichnet, daß

dann, wenn der einem zu interpolierenden Pixel gehörende Bewegungsvektor null ist und die Zuverlässigkeit in diesem Vektor einen bestimmten Schwellwert übersteigt, der Wert des zu interpolierenden Pixels der endgültige Wert aus der Medianfilterung ist zwischen

erstens den beiden Pixelwerten, die durch eine Subtraktion beziehungsweise Addition der Zuverlässigkeit des für ein Pixel wiederhergestellten Bewegungsvektors ist, dividiert durch einen Korrekturfaktor (Scale), bei dem Pixelwert mit derselben Lage wie das zu interpolierende Pixel in, entsprechend dem jeweiligen Fall, dem vorangehenden Eingangshalbbild oder dem folgenden Eingangshalbbild und

zweitens einem Ersatzwert, der aus einer linearen zeitlichen und horizontalen Filterung über die Pixel der Zeilen der vorangehenden und folgenden Eingangshalbbilder mit einer identischen Lage zu der den zu interpolierenden Pixel enthaltenden Zeile resultiert, wobei eine vertikale, räumliche Filterung gegebenenfalls für die nicht durch die Eingangshalbbilder bestimmten Zeilen erfolgt.

**10.** Verfahren nach Anspruch 9, dadurch gekennzeichnet, daß der Ersatzwert gleich ist zu:

$$\text{Ersatz}(x,y) = \frac{1}{16}(1\ 2\ 3\ 4\ 3\ 2\ 1)\left[m\begin{pmatrix}P(x-3,y,0)\\P(x-2,y,0)\\P(x-1,y,0)\\P(x,y,0)\\P(x+1,y,0)\\P(x+2,y,0)\\P(x+3,y,0)\end{pmatrix} + (1-m)\begin{pmatrix}P\left(x-3,y,\frac{1}{2}\right)\\P\left(x-2,y,\frac{1}{2}\right)\\P\left(x-1,y,\frac{1}{2}\right)\\P\left(x,y,\frac{1}{2}\right)\\P\left(x+1,y,\frac{1}{2}\right)\\P\left(x+2,y,\frac{1}{2}\right)\\P\left(x+3,y,\frac{1}{2}\right)\end{pmatrix}\right]$$

dabei bezeichnet "0" das dem zu interpolierenden Halbbild vorangehende Eingangshalbbild und "1/2" das auf das zu interpolierende Halbbild folgende Eingangshalbbild, und m bezeichnet einen Wichtungskoeffizienten, der von der zeitlichen Lage des zu interpolierenden Halbbildes zwischen den Eingangshalbbildern abhängig ist.

**11.** Verfahren nach einem der Ansprüche 9 oder 10, dadurch gekennzeichnet, daß die Interpolation eines Pixels (P(x,y)) einer Zeile mit einer bestimmten Parität eines Halbbildes (1), dessen Zeilen mit entgegengesetzter Parität gleich den Zeilen eines Eingangshalbbildes (1) sind, dann, wenn der zugehörige Bewegungsvektor nicht null ist oder die diesem Vektor zugeteilte Zuverlässigkeit gering ist, mittels einer Medianfilterung (P1(x,y)) für die erhaltenden Werte erfolgt

erstens durch eine lineare vertikale Filterung (F1),
zweitens durch eine räumlich-zeitliche vertikale Medianfilterung für 2 Pixel, die für ein Pixel (F2) bewegungskompensiert ist, und,
drittens durch eine räumlich-zeitliche Medianfilterung für vier Pixel in einem Kreuz, die für ein Pixel (F3) bewegungskompensiert ist.

**12.** Verfahren nach Anspruch 11, dadurch gekennzeichnet, daß die lineare, vertikale Filterung (F1) die folgende ist:

$$F1(x,y) = \frac{1}{2}\left( P\left[\binom{x}{y-1}, 0\right] + P\left[\binom{x}{y+1}, 0\right] \right)$$

dabei stellt "0" die zeitliche Lage des zu interpolierenden Halbbildes dar.

**13.** Verfahren nach einem der Ansprüche 11 oder 12, dadurch gekennzeichnet, daß die räumlich-zeitliche, vertikale Filterung für zwei Pixel, die für ein Pixel (F2) bewegungskompensiert ist, folgendermaßen ist:

$$F2(x,y) = med\left( P\left[\binom{x}{y-1}, 0\right]; P\left[\binom{x}{y+1}, 0\right]; P\left[\binom{x+v_x}{y+v_y}, \frac{1}{2}\right] \right)$$

dabei sind Vx und Vy die Koordinaten eines zu dem zu interpolierenden Pixel gehörenden Bewegungsvektors, und "0" stellt das zu interpolierende Halbbild und "1/2" das folgende Eingangshalbbild dar.

**14.** Verfahren nach einem der Ansprüche 11 bis 13, dadurch gekennzeichnet, daß die räumlich-zeitliche Filterung für vier Pixel in einem Kreuz und für ein bewegungskompensiertes Pixel (F3), folgendermaßen ist:

$$F3(x,y) = med\left( P\left[\binom{x-1}{y-1}, 0\right]; P\left[\binom{x-1}{y+1}, 0\right]; P\left[\binom{x+1}{y-1}, 0\right]; P\left[\binom{x+1}{y+1}, 0\right]; P\left[\binom{x+v_x}{y+v_y}, \frac{1}{2}\right] \right)$$

**15.** Verfahren nach einem der Ansprüche 11 bis 14, dadurch gekennzeichnet, daß dann, wenn der einem zu interpolierenden Pixel gehörende Bewegungsvektor null und wenn die Zuverlässigkeit in diesem Vektor größer als ein bestimmter Schwellwert ist, das Pixel den Wert des Pixels mit derselben Lage in dem folgenden Eingangshalbbild annimmt.

**Claims**

**1.** Process for converting interlaced fields into progressive fields comprising a change of field frequency by interpolation and motion compensation characterized in that

when the motion vector associated with a pixel to be interpolated is non-zero or when this vector is zero, but the confidence accorded to this vector is less than a given threshold,
the interpolation of a pixel (x,y) of a field situated temporally between two input fields is carried out by a median filtering pertaining to the values obtained by a first motion-compensated linear temporal filter, a second motion-compensated linear temporal filter and a motion-compensated median temporal filter.

**2.** Process according to Claim 1, characterized in that the confidence accorded to a vector is a linear function of the error engendered by this vector.

**3.** Process according to one of Claims 1 or 2, characterized in that the said linear filters are dependent on two pixels (a,b respectively b,c) situated respectively in the input fields temporally surrounding the field to be interpolated, the linear interpolation coefficients of each pixel corresponding to the ratio of the time intervals separating the field to be interpolated and the preceding input field and the following input field respectively.

**4.** Process according to one of Claims 1 to 3, characterized in that when the preceding input field is odd, the said median temporal filter pertains to the following three pixels:

For the even lines of the frame to be interpolated,

$$a = P\left[\left(\begin{array}{c} x \\ y-1 \end{array}\right) + \text{Front}(i,j), \frac{1}{2}\right]$$

$$b = P\left[\left(\begin{array}{c} x \\ y \end{array}\right) - \text{Rear}(i,j), 0\right]$$

$$c = P\left[\left(\begin{array}{c} x \\ y+1 \end{array}\right) + \text{Front}(i,j), \frac{1}{2}\right]$$

then:

$$P_2(x,y) = \text{med}(ma + (1-m)b; \text{med}(a,b,c); mc + (1-m)b)$$

For the odd lines of the frame to be interpolated,

$$a = P\left[\left(\begin{array}{c} x \\ y-1 \end{array}\right) - \text{Rear}(i,j), 0\right]$$

$$b = P\left[\left(\begin{array}{c} x \\ y \end{array}\right) + \text{Front}(i,j), \frac{1}{2}\right]$$

$$c = P\left[\left(\begin{array}{c} x \\ y+1 \end{array}\right) - \text{Rear}(i,j), 0\right]$$

then:

$$P_2(x,y) = \text{med}((1-m)a + mb; \text{med}(a,b,c); (1-m)c + mb)$$

where Front(i,j) and Rear(i,j) are the fractions of the motion vector associated with the pixel to be interpolated, this vector being scaled and rounded, where "0" and "1/2" respectively represent the input field preceding respectively following the field to be interpolated, and where m represents an interpolation coefficient depending on the position of the field to be interpolated between the input fields.

5. Process according to one of Claims 1 to 3, characterized in that when the preceding input field is odd, the said median temporal filter pertains to the following three pixels:

For the odd lines of the frame to be interpolated:

$$a = P\left[\begin{pmatrix} x \\ y-1 \end{pmatrix} + Front(i,j), 1\right]$$

$$b = P\left[\begin{pmatrix} x \\ y \end{pmatrix} - Rear(i,j), \frac{1}{2}\right]$$

$$c = P\left[\begin{pmatrix} x \\ y+1 \end{pmatrix} + Front(i,j), 1\right]$$

then:

$$P_3(x,y) = med\big((1-n)a+b; med(a,b,c); (1-n)c+b\big)$$

For the even lines of the frame to be interpolated:

$$a = P\left[\begin{pmatrix} x \\ y-1 \end{pmatrix} - Rear(i,j), \frac{1}{2}\right]$$

$$b = P\left[\begin{pmatrix} x \\ y \end{pmatrix} + Front(i,j), 1\right]$$

$$c = P\left[\begin{pmatrix} x \\ y+1 \end{pmatrix} - Rear(i,j), \frac{1}{2}\right]$$

then:

$$P3(x,y) = med\big(na+(1-n)b; med(a,b,c); nc+(1-n)b\big)$$

where Front(i,j) and Rear(i,j) are the fractions of the motion vector associated with the pixel to be interpolated, this vector being scaled and rounded, where "1/2" and "1" respectively represent the input field preceding respectively following the field to be interpolated, and where n represents an interpolation coefficient depending on the position of the field to be interpolated between the input fields.

6. Process according to Claim 3 and one of Claims 4 or 5, characterized in that the two pixels used for each linear filter are chosen from the group of three pixels used by the median temporal filter.

7. Process according to one of the preceding claims, characterized in that

the interlaced input fields emanate from progressive input frames of frequency 25 Hz and that the frequency of the output fields is 75 Hz, a first output field (F1) being temporally merged with the second field emanating from a first input frame, a second output field (F2) being temporally situated between the said first input field and the first field (F2/3) emanating from a second input frame, a third output field (F3) being temporally situated between the two input fields (F2/3, F4) emanating from the said second input frame,
the interpolation coefficients used by the said temporal filters are 1/2 for the said second output field.

**8.** Procss according to Claim 7, characterized in that
the pixels of the said third output field are the pixels of the second input frame.

**9.** Process according to one of Claims 1 to 8, characterized in that

when the motion vector associated with a pixel to be interpolated is zero and the confidence in this vector exceeds a given threshold, then the value of the pixel to be interpolated is the final value obtained by median filtering between
firstly the two pixel values obtained by subtracting, respectively adding the motion vector confidence referred to the pixel and divided by a corrective factor (Scale) from/to the value of the pixel with the same position as the pixel to be interpolated in, as the case may be, the preceding input field or the following input field, and
secondly a fallback value which results from a temporal and horizontal linear filtering on the pixels of the lines of the preceding and following input fields with identical position to the line containing the pixel to be interpolated, a vertical spatial filtering being performed if appropriate on the undefined lines of the input fields.

**10.** Process according to Claim 9, characterized in that the fallback value is equal to:

$$\text{Fallback}(x,y) = \frac{1}{16}\begin{pmatrix}1 & 2 & 3 & 4 & 3 & 2 & 1\end{pmatrix}\left[m\begin{pmatrix}P(x-3,y,0)\\P(x-2,y,0)\\P(x-1,y,0)\\P(x,y,0)\\P(x+1,y,0)\\P(x+2,y,0)\\P(x+3,y,0)\end{pmatrix} + (1-m)\begin{pmatrix}P(x-3,y,\frac{1}{2})\\P(x-2,y,\frac{1}{2})\\P(x-1,y,\frac{1}{2})\\P(x,y,\frac{1}{2})\\P(x+1,y,\frac{1}{2})\\P(x+2,y,\frac{1}{2})\\P(x+3,y,\frac{1}{2})\end{pmatrix}\right]$$

where "0" denotes the input field preceding the field to be interpolated and "1/2" the input field following the field to be interpolated, and where m represents a weighting coefficient depending on the temporal position of the field to be interpolated between the input fields.

**11.** Process according to one of Claims 9 or 10, characterized in that

the interpolation of a pixel (P(x,y)) of a line of given parity of a field (1) whose lines of opposite parity are equal to the lines of an input field (1) is carried out, when the associated motion vector is not zero or the confidence accorded to this vector is low, through median filtering (P1(x,y)) pertaining to the values obtained
firstly by vertical linear filtering (F1),
secondly by vertical spatio-temporal median filtering on two pixels and motion-compensated on one pixel (F2) and
thirdly by spatio-temporal median filtering pertaining to four pixels in a cross and motion-compensated on one pixel (F3).

**12.** Process according to Claim 11, characterized in that the said vertical linear filtering (F1) is as follows:

$$F1(x,y) = \frac{1}{2}\left(P\left[\begin{pmatrix}x\\y-1\end{pmatrix},0\right] + P\left[\begin{pmatrix}x\\y+1\end{pmatrix},0\right]\right)$$

where "0" represents the temporal position of the field to be interpolated.

13. Process according to one of Claims 11 or 12, characterized in that the said vertical spatio-temporal filtering on two pixels and motion-compensated on a pixel (F2) is:

$$F2(x,y) = \text{med}\left(P\left[\begin{pmatrix} x \\ y-1 \end{pmatrix}, 0\right]; P\left[\begin{pmatrix} x \\ y+1 \end{pmatrix}, 0\right]; P\left[\begin{pmatrix} x+v_x \\ y+v_y \end{pmatrix}, \frac{1}{2}\right]\right)$$

where Vx and Vy are the coordinates of a motion vector associated with the pixel to be interpolated, and where "0" represents the field to be interpolated and "1/2" the following input field.

14. Process according to one of Claims 11 to 13, characterized in that the said spatio-temporal filtering pertaining to four pixels in a cross and to a motion-compensated pixel (F3) is:

$$F3(x,y) = \text{med}\left(P\left[\begin{pmatrix} x-1 \\ y-1 \end{pmatrix}, 0\right]; P\left[\begin{pmatrix} x-1 \\ y+1 \end{pmatrix}, 0\right]; P\left[\begin{pmatrix} x+1 \\ y-1 \end{pmatrix}, 0\right]; P\left[\begin{pmatrix} x+1 \\ y+1 \end{pmatrix}, 0\right]; P\left[\begin{pmatrix} x+v_x \\ y+v_y \end{pmatrix}, \frac{1}{2}\right]\right)$$

15. Process according to one of Claims 11 to 14, characterized in that when the motion vector associated with a pixel to be interpolated is zero and the confidence in this vector is greater than a given threshold, then the said pixel takes the value of the pixel with the same position in the following input field.

FIG.1    △ LIGNE EN SORTIE    ○ LIGNE EN ENTRÉE

EP 0 781 041 B1

FIG.2

EP 0 781 041 B1

**FIG.3**

FIG. 4

FIG.5

FIG.6

TRAME 1

|  |  |  |  |  |  |  |  |  |  |  |
|---|---|---|---|---|---|---|---|---|---|---|
|  |  | 1 | 2 | 3 | 4 | 3 | 2 | 1 | · |  |
|  |  |  |  |  | ◯ |  |  |  |  |  |
|  |  | 1 | 2 | 3 | 4 | 3 | 2 | 1 |  |  |

TRAME 2/3

|  |  |  |  |  |  |  |  |  |  |  |
|---|---|---|---|---|---|---|---|---|---|---|
|  | 1 | 2 | 3 | 4 | 3 | 2 | 1 |  |  |  |
|  | 2 | 4 | 6 | ⑧ | 6 | 4 | 2 |  |  |  |
|  | 1 | 2 | 3 | 4 | 3 | 2 | 1 |  |  |  |

◯ PIXEL À GÉNÉRER

# FIG.7

FIG.8

TRAME 1    TRAME 2    TRAME 2/3

TRAME 1                    TRAME 2/3   TRAME 3

# FIG.9

(a)

(b)

FIG.10

FIG.11

FIG.12

EP 0 781 041 B1

FIG.13

TRAME 1    TRAME 2    TRAME 2/3

TRAME 1

TRAME 2

TRAME 2/3

△   PIXEL DE SORTIE À INTERPOLER

+   PIXEL MOYENNE VERTICALEMENT AVANT
    ESTIMATION MOUVEMENT DES TRAMES D'ENTRÉE

●   PIXEL EN ENTRÉE

IDENTIFIE LES TROIS PIXEL UTILISÉS PAR
LE FILTRE MÉDIAN

VECTEUR MOUVEMENT

VECTEUR MOUVEMENT CORRIGÉ ET ARRONDI

TRAME D'ENTRÉE

TRAME DE SORTIE

EP 0 781 041 B1

FIG.14

Légende :

△ PIXEL DE SORTIE À INTERPOLER

+ PIXEL MOYENNE VERTICALEMENT AVANT ESTIMATION MOUVEMENT DES TRAMES D'ENTRÉE

● PIXEL EN ENTRÉE

IDENTIFIE LES TROIS PIXEL UTILISÉS PAR LE FILTRE MÉDIAN

VECTEUR MOUVEMENT

VECTEUR MOUVEMENT CORRIGÉ ET ARRONDI

TRAME D'ENTRÉE

TRAME DE SORTIE

TRAME 2/3    TRAME 3    TRAME 4

TRAME 2/3    TRAME 3    TRAME 4

**50hz** 1    2/3    4    5/6

**A**   I1   I2/3   I2/3   I4   I5/6

**G**   X   T1   T1   T2/3   T4

**B**   SB X//1   MB1//2/3   SB1//2/3   SB2/3//4   MB4//5/6
   ==0            ==0

**C**   S1   S2/3   S2/3   S4   S5/6

**D**   P1 (X)   ----   P2/3(T1)   P4(T2/3)   ----

**E**   T1   S2/3   T2/3   T4   S5/6

**F**   Ox(X,T1)   O2(T1,T2/3)   O4(T4,S5/6)
   O1(T1,S2/3)   O3(T2/3,T4)

## FIG.15

FIG.16